# EUROPEAN PATENT APPLICATION

(11) **EP 4 848 833 A1**
(43) Date of publication of application: **02.12.2026**
(21) Application number: 25747502.0
(22) Date of filing: 13.01.2025
(51) Int. Cl.: H04W 52/02

(54) **COMMUNICATION METHOD AND APPARATUS**

(30) Priority: 01.02.2024 CN 202410149630
(71) Applicant: Huawei Technologies Co., Ltd., Shenzhen, Guangdong 518129 (CN)
(72) Inventor: SENG, Shuming, Shenzhen, Guangdong 518129 (CN); LI, Chenwan, Shenzhen, Guangdong 518129 (CN); WU, Yiling, Shenzhen, Guangdong 518129 (CN)
(74) Representative: Huawei European IPR
(86) International application number: PCT/CN2025/072030
(87) International publication number: WO 2025/161926

(57) **Abstract**

A communication method and apparatus, relating to the field of communication technologies, are provided, to flexibly configure a power saving mode of a terminal device. The method includes: obtaining first indication information, where the first indication information indicates the terminal device to initiate access to a network or monitor a paging message after a power saving duration, and the first indication information includes power saving duration information; and initiating the access to the network or monitor the paging message after the power saving duration based on the first indication information.

## Description

This application claims priority to Chinese Patent Application No. 202410149630.9, filed with the China National Intellectual Property Administration on February 1, 2024 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In a communication system, a terminal device may enter a sleep state in a power saving mode (power saving mode, PSM) or in a discontinuous reception (discontinuous reception, DRX) mode, to reduce power consumption through sleep.

However, for the PSM mode, after entering the sleep state, the terminal device does not detect system messages. Even if a tracking area or a registration area changes due to movement of the terminal device, the terminal device does not exit the PSM mode. In other words, the terminal device cannot be paged in the PSM mode, resulting in poor communication performance. For the DRX mode, the terminal device needs to detect, in different DRX cycles, a paging message initiated by a core network and a paging message initiated by an access network. Consequently, the terminal device needs to frequently wake up, resulting in increased power consumption and reduced standby time.

In conclusion, how to flexibly configure the power saving mode of the terminal device to improve the communication performance while reducing the power consumption becomes an urgent technical problem to be resolved.

### SUMMARY

This application provides a communication method and apparatus, to flexibly configure a power saving mode of a terminal device.

According to a first aspect, this application provides a communication method. The method may be performed by a terminal device. Unless otherwise specified, the "terminal device" in this application may be the terminal device, or may be a part (for example, a processor, a chip, or a chip system) in the terminal device, or may be a logical module or software that can implement all or some functions of the terminal device. The method includes: obtaining first indication information, where the first indication information indicates the terminal device to initiate access to a network or monitor a paging message after a power saving duration, and the first indication information includes power saving duration information; and initiating the access to the network or monitor the paging message after the power saving duration based on the first indication information.

Based on the first aspect, the first indication information may flexibly indicate an operation (for example, initiating the access to the network or monitoring the paging message) performed by the terminal device after the power saving duration, so that communication performance can be improved while power consumption of the terminal device is reduced, and further, complexity of power saving configuration can be reduced.

In a possible design, second indication information is obtained, where the second indication information indicates whether to periodically initiate the access to the network.

In a possible design, third indication information is obtained, where the third indication information indicates whether to periodically monitor the paging message.

In a possible design, accessing a network device after the power saving duration includes: performing tracking area update TAU after the power saving duration; or performing periodic TAU after the power saving duration.

In a possible design, the monitoring the paging message after the power saving duration includes: monitoring the paging message in a first time period after the power saving duration; periodically monitoring the paging message after the power saving duration; or continuously monitoring the paging message after the power saving duration.

In a possible design, fourth indication information is obtained, where the fourth indication information indicates a periodicity of initiating the access to the network or monitoring the paging message; or the power saving duration is determined as a periodicity of initiating the access to the network or monitoring the paging message.

In a possible design, fifth indication information is sent, where the fifth indication information indicates a power saving duration that the terminal device expects to obtain.

Based on the possible design, a core network device or the network device may also configure the power saving duration for the terminal device based on the power saving duration that the terminal device expects to obtain.

In a possible design, when the power saving duration is less than or equal to a first threshold, the power saving duration information includes hyperframe information corresponding to the power saving duration; or when the power saving duration is greater than a first threshold, the power saving duration information includes absolute duration information of the power saving duration.

Based on the possible design, a plurality of feasible solutions are provided for designing the power saving duration information.

In a possible design, configuration information of a first timer is obtained, where the configuration information of the first timer indicates the first timer; and a power saving mode is activated when the first timer expires.

In a possible design, before the configuration information of the first timer is obtained, sixth indication information is sent, where the sixth indication information indicates a duration, of the first timer, that the terminal device expects to obtain.

Based on the foregoing two possible designs, before activating the power saving mode, the terminal device may first start the first timer, and the terminal device activates the power saving mode when the first timer expires. During running of the first timer, the terminal device may normally send uplink data, or receive downlink data or a downlink signal from the network device.

In a possible design, the obtaining the first indication information includes: receiving the first indication information from the core network device.

In a possible design, the core network device is one or more of the following: a mobility management network element, an authentication server function network element, and a tag management function network element.

Based on the possible design, the core network device may directly send the first indication information to the terminal device, or the core network device may send the first indication information to the terminal device via the network device. This is not limited.

According to a second aspect, this application provides a communication method. The method may be performed by a core network device. Unless otherwise specified, the "core network device" in this application may be the core network device, or may be a part (for example, a processor, a chip, or a chip system) in the core network device, or may be a logical module or software that can implement all or some functions of the core network device. The method includes: generating first indication information; and sending the first indication information, where the first indication information indicates a terminal device to initiate access to a network or monitor a paging message after a power saving duration, and the first indication information includes power saving duration information.

Based on the second aspect, the first indication information may flexibly indicate an operation (for example, initiating the access to the network or monitoring the paging message) performed by the terminal device after the power saving duration, so that communication performance can be improved while power consumption of the terminal device is reduced, and further, complexity of power saving configuration can be reduced.

In a possible design, second indication information is sent, where the second indication information indicates whether to periodically initiate the access to the network.

In a possible design, third indication information is sent, where the third indication information indicates whether to periodically monitor the paging message.

In a possible design, fourth indication information is sent, where the fourth indication information indicates a periodicity of initiating the access to the network or monitoring the paging message; or the power saving duration is determined as a periodicity of initiating the access to the network or monitoring the paging message.

In a possible design, fifth indication information is obtained, where the fifth indication information indicates a power saving duration that the terminal device expects to obtain.

In a possible design, the power saving duration is determined based on the fifth indication information.

Based on the foregoing two possible designs, the core network device may also configure the power saving duration for the device based on the power saving duration that the terminal device expects to obtain.

In a possible design, when the power saving duration is less than or equal to a first threshold, the power saving duration information includes hyperframe information corresponding to the power saving duration; or when the power saving duration is greater than a first threshold, the power saving duration information includes absolute duration information of the power saving duration.

Based on the possible design, a plurality of feasible solutions are provided for designing the power saving duration information.

In a possible design, seventh indication information is sent to a network device, where the seventh indication information indicates wake-up time information of the terminal device.

In a possible design, the wake-up time information includes at least one of a frame number, a subframe number, or absolute time corresponding to wake-up time of the terminal device; or the wake-up time information includes a difference between a current moment and wake-up time of the terminal device.

Based on the foregoing two possible designs, the core network device may further indicate the wake-up time information of the terminal device to the network device. Based on this, the network device may send the paging message to the terminal device when the terminal device is in an awake state, to improve communication performance.

In a possible design, configuration information of a first timer is sent, where the configuration information of the first timer indicates the first timer, and the first timer is used by the terminal device to activate a power saving mode when the first timer expires.

In a possible design, before the configuration information of the first timer is sent, sixth indication information is obtained, where the sixth indication information indicates a duration, of the first timer, that the terminal device expects to obtain.

Based on the foregoing two possible designs, before activating the power saving mode, the terminal device may first start the first timer, and the terminal device activates the power saving mode when the first timer expires. During running of the first timer, the terminal device may normally send uplink data, or receive downlink data or a downlink signal from the network device.

According to a third aspect, this application provides a communication apparatus. The communication apparatus may be used in the terminal device in the first aspect, to implement the function performed by the terminal device. The communication apparatus may be the terminal device, or may be a chip, a chip system, a system on chip, or the like in the terminal device. The communication apparatus may perform, by hardware or by hardware executing corresponding software, the function performed by the terminal device. The hardware or the software includes one or more modules corresponding to the foregoing function, for example, a transceiver module and a processing module. The transceiver module may independently complete the following receiving and sending operations, or may cooperate with the processing module to complete the following receiving and sending operations. Correspondingly, the processing module may independently complete the following processing operation, or may cooperate with the transceiver module to complete the following processing operation. This is not limited.

For example, the transceiver module is configured to obtain first indication information, where the first indication information indicates the terminal device to initiate access to a network or monitor a paging message after a power saving duration, and the first indication information includes power saving duration information; and the processing module is configured to initiate the access to the network or monitor the paging message after the power saving duration based on the first indication information.

Optionally, the transceiver module and the processing module of the communication apparatus in the third aspect may further perform corresponding functions in any one of the possible designs of the first aspect. For details, refer to detailed descriptions in the method examples. For beneficial effects that can be achieved, refer to the foregoing related content.

According to a fourth aspect, this application provides a communication apparatus. The communication apparatus may be used in the core network device in the second aspect, to implement the function performed by the core network device. The communication apparatus may be the core network device, or may be a chip, a chip system, a system on chip, or the like in the core network device. The communication apparatus may perform, by hardware or by hardware executing corresponding software, the function performed by the core network device. The hardware or the software includes one or more modules corresponding to the foregoing function, for example, a transceiver module and a processing module. The transceiver module may independently complete the following receiving and sending operations, or may cooperate with the processing module to complete the following receiving and sending operations. Correspondingly, the processing module may independently complete the following processing operation, or may cooperate with the transceiver module to complete the following processing operation. This is not limited.

For example, the processing module is configured to generate first indication information; and the transceiver module is configured to send the first indication information, where the first indication information indicates a terminal device to initiate access to a network or monitor a paging message after a power saving duration, and the first indication information includes power saving duration information.

Optionally, the transceiver module and the processing module of the communication apparatus in the fourth aspect may further perform corresponding functions in any one of the possible designs of the second aspect. For details, refer to detailed descriptions in the method examples. For beneficial effects that can be achieved, refer to the foregoing related content.

According to a fifth aspect, this application provides a communication apparatus. The communication apparatus includes one or more processors. The one or more processors are configured to run a computer program or instructions. When the one or more processors execute the computer instructions or the instructions, the communication method according to either the first aspect or the second aspect is performed.

In a possible design, the communication apparatus further includes one or more memories, the one or more memories are coupled to the one or more processors, and the one or more memories are configured to store the foregoing computer program or instructions. In a possible implementation, the memory is located outside the communication apparatus. In another possible implementation, the memory is located inside the communication apparatus. In this application, the processor and the memory may alternatively be integrated into one device. In other words, the processor and the memory may alternatively be integrated together. In a possible implementation, the communication apparatus further includes a transceiver. The transceiver is configured to receive information and/or send information.

In a possible design, the communication apparatus further includes one or more communication interfaces, the one or more communication interfaces are coupled to the one or more processors, and the one or more communication interfaces are configured to communicate with another module outside the communication apparatus.

According to a sixth aspect, this application provides a communication apparatus. The communication apparatus includes an interface circuit and a logic circuit. The interface circuit is configured to input and/or output information. The logic circuit is configured to perform the communication method according to either the first aspect or the second aspect, and perform processing based on the information and/or generate the information.

According to a seventh aspect, this application provides a computer-readable storage medium. The computer-readable storage medium stores computer instructions or a program. When the computer instructions or the program is run on a computer, the communication method according to either the first aspect or the second aspect is performed.

According to an eighth aspect, this application provides a computer program product including computer instructions. When the computer program product is run on a computer, the communication method according to either the first aspect or the second aspect is performed.

According to a ninth aspect, this application provides a computer program. When the computer program is run on a computer, the communication method according to either the first aspect or the second aspect is performed.

According to a tenth aspect, this application provides a chip, including one or more processors. The processor is coupled to one or more memories, the memory is configured to store a program or instructions, and when the program or the instructions are executed by the processor, the communication method according to either the first aspect or the second aspect is performed.

For technical effects brought by any design in the fifth aspect to the tenth aspect, refer to the technical effects brought by either the first aspect or the second aspect. Details are not described again.

According to an eleventh aspect, this application provides a communication system. The communication system may include the communication apparatus configured to perform the first aspect or any possible design of the first aspect and the communication apparatus configured to perform the second aspect or any possible design of the second aspect.

### BRIEF DESCRIPTION OF DRAWINGS

FIG. 1 is a diagram of configuring and activating a PSM mode according to an embodiment of this application;
FIG. 2 is a flowchart of performing selection, inventory, and access on a tag by a reader according to an embodiment of this application;
FIG. 3 is a diagram of a communication system according to an embodiment of this application;
FIG. 4a to FIG. 4c are diagrams of a communication system according to an embodiment of this application;
FIG. 5a to FIG. 5d are diagrams of a communication system according to an embodiment of this application;
FIG. 6 is a diagram of a communication system according to an embodiment of this application;
FIG. 7a and FIG. 7b are diagrams of a communication system according to an embodiment of this application;
FIG. 8a and FIG. 8b are diagrams of a communication system according to an embodiment of this application;
FIG. 9 is a flowchart of a communication method according to an embodiment of this application;
FIG. 10 is a flowchart of a communication method according to an embodiment of this application;
FIG. 11 is a flowchart of a communication method according to an embodiment of this application;
FIG. 12 is a diagram of a communication method according to an embodiment of this application;
FIG. 13 is a diagram of a PO according to an embodiment of this application;
FIG. 14 is a diagram of composition of a terminal device according to an embodiment of this application;
FIG. 15 is a diagram of composition of a core network device according to an embodiment of this application;
FIG. 16 is a diagram of composition of a communication apparatus according to an embodiment of this application; and
FIG. 17 is a diagram of a communication apparatus according to an embodiment of this application.

### DESCRIPTION OF EMBODIMENTS

Before embodiments of this application are described, technical terms used in embodiments of this application are described.

**Power saving mode (power saving mode, PSM):** A principle of the power saving mode is that after being in an idle state for a time period, a terminal device is allowed to disable signal receiving and sending and functions related to an access stratum (access stratum, AS), which is equivalent to partial shutdown, thereby reducing power consumption of antennas, radio frequency, signaling processing, and the like, and thus reducing power consumption of the terminal device.

Specifically, a core network (core network, CN) may configure the PSM mode for the terminal device, and a network device is unaware of the PSM mode. After completing communication, the terminal device may activate the PSM mode and enter a sleep state. After activating the PSM mode, the terminal device does not receive any network paging. For a network side, the terminal device is unreachable in this case, and all of data, short messages, and calls cannot be received. In other words, the terminal device is in the sleep state, and is almost powered off. This can greatly save power. In addition, although the terminal device does not detect paging in the PSM mode, the terminal device is still registered with the network. Therefore, when the terminal device needs to send data, the terminal device does not need to perform reconnection or establish a packet data network (packet data network, PDN) connection.

The terminal device and a core network device may negotiate an active (active) timer by using a non-access stratum (non-access stratum, NAS) message, and the active timer is started after the terminal device switches to the idle state. After the active timer expires, the core network device determines that the terminal device enters the PSM mode and cannot receive downlink services or paging. For a terminal device side, the terminal device disables the access stratum function (for example, cell selection) to save power. In this way, information about the terminal device entering the PSM mode is synchronized between the terminal device and the network side.

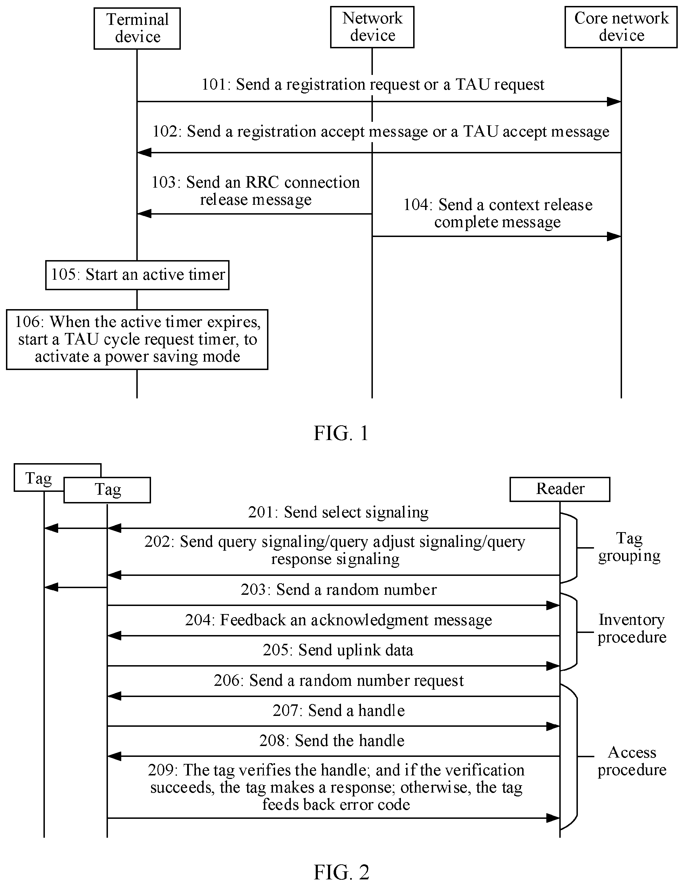

For example, as shown in FIG. 1, the terminal device may obtain a PSM mode configuration and activate the PSM mode based on the following steps.

Step 101: The terminal device sends a registration request or a tracking area update (tracking area update, TAU) request to the core network device; and correspondingly, the core network device receives the registration request or the TAU request from the terminal device.

The terminal device may initiate a registration procedure or a TAU procedure to the core network device, and include a timer configuration request in the registration request or the TAU request, to obtain an active timer configuration and a TAU cycle request timer configuration.

Step 102: The core network device sends a registration accept message or a TAU accept message to the terminal device; and correspondingly, the terminal device receives the registration accept message or the TAU accept message from the core network device.

The registration accept message or the TAU accept message may include a timer configuration, and the timer configuration may include the active timer configuration and the TAU cycle request timer (for example, a timer T3412) configuration.

Optionally, the TAU cycle request timer is 54 minutes (54 min) by default, and may reach a maximum of 310 hours (310 h).

Step 103: The network device sends a radio resource control (radio resource control, RRC) connection release message to the terminal device; and correspondingly, the terminal device receives the RRC connection release message from the network device.

When the terminal device completes service transmission, the network device may send the RRC connection release message to the terminal device, or it is described as that after the terminal device completes data processing, an RRC connection is released, and the terminal device enters the idle state.

Step 104: The network device sends a context release complete message to the core network device; and correspondingly, the core network device receives the context release complete message from the network device.

Step 105: The terminal device starts an active timer.

When the terminal device releases the RRC connection to the network device, the terminal device may start the active timer. Alternatively, it may be described as that after exiting a connected state and entering the idle state, the terminal device starts the active timer.

During running of the active timer, the terminal device may normally receive a paging message sent by the network device, or may perform radio resource management (radio resource measurement, RRM) measurement or the like.

Step 106: When the active timer expires, the terminal device starts the TAU cycle request timer, to activate the PSM mode.

The TAU cycle request timer may also be used to define time at which the terminal device activates the PSM mode. When the terminal device starts the TAU cycle request timer, it may be considered that the terminal device activates the PSM mode.

Optionally, when the TAU cycle request timer expires, the terminal device exits the PSM mode; or when the terminal device needs to process a (mobile originated, MO) short message service, the terminal device autonomously exits the PSM mode, and then enters the idle state, and enters the connected state to process uplink/downlink services.

In the PSM mode, due to deactivation of an access stratum function, the terminal device stops all idle mode procedures, but continues to run any NAS timer that may be used, for example, the TAU cycle request timer. The terminal device may restore the access stratum function and the idle mode procedure before the TAU cycle request timer expires, to perform a periodic TAU process. The terminal device may alternatively restore the idle mode procedure and the access stratum function at any time in the PSM mode, for example, for mobile originated communication. Any timer and condition that remain valid during power-off, for example, NAS-level backoff, are applied in the same manner during the PSM mode.

However, for the PSM mode, after entering the sleep state, the terminal device does not detect system messages. Even if a tracking area (tracking area, TA) or a registration area (registration area, RA) changes due to movement of the terminal device, the terminal device does not exit the PSM mode. In other words, the terminal device cannot be paged in the PSM mode, resulting in poor communication performance.

**Discontinuous reception (discontinuous reception, DRX) mode:** The network device may configure DRX for the terminal device. The terminal device may detect a physical downlink control channel (physical downlink control channel, PDCCH) in a DRX active state, turn on a receiver for receiving when detecting the PDCCH, and turn off the receiver in other time to enter a DRX sleep state, thereby reducing power consumption of the terminal device. According to the DRX technology, the terminal device may not continuously detect and parse the PDCCH to check whether the network device schedules resources for the terminal device for data transmission.

Specifically, in the DRX technology, one DRX cycle may be divided into two modes: DRX on (DRX On) and DRX off (DRX Off). The DRX on mode may also be referred to as the DRX active state, and the DRX off mode may also be referred to as the DRX sleep state.

In the DRX on mode, the terminal device may start a drx-onDurationTimer (drx-onDurationTimer), and the timer may indicate time for which the terminal device keeps awake after waking up. During running of the drx-onDurationTimer, the terminal device continuously detects the PDCCH. When the terminal device detects the PDCCH during the running of the drx-onDurationTimer, the terminal device starts a drx-InactivityTimer (drx-InactivityTimer), and enters the DRX off mode after data reception is completed. If the terminal device detects no PDCCH before the drx-onDurationTimer expires, the terminal device enters the DRX off mode.

In addition to entering the DRX off mode by the terminal device when the drx-onDurationTimer expires and the drx-InactivityTimer expires, during data transmission, when the network device has no more data to transmit to the terminal device, the network device may send DRX command media access control control element (DRX command media access control control element, DRX command MAC CE) signaling to the terminal device, and the terminal device may also enter the DRX off mode based on the signaling, and immediately stop the drx-onDurationTimer and the drx-InactivityTimer.

In addition to DRX, the terminal device may alternatively periodically wake up to detect a paging message by using an extended discontinuous reception (extended discontinuous reception, eDRX) mechanism, and a cycle of periodic wake-up may be referred to as an eDRX cycle. A difference between DRX and eDRX lies in different cycle durations. The eDRX cycle is greater than the DRX cycle. Therefore, using the eDRX mechanism can increase a sleep duration of the terminal device, and reduce a quantity of times of periodic wake-up, to further reduce power consumption.

Paging messages detected by the terminal device may be classified into two types: a paging message initiated by the core network and a paging message initiated by a radio access network (radio access network, RAN). Different paging messages are sent in different periodicities. Therefore, a plurality of eDRX cycles are configured on the network side, for example, a first eDRX cycle and a second eDRX cycle are configured. The terminal device detects, based on the first eDRX cycle, the paging message initiated by the core network, and detects, based on the second eDRX cycle, the paging message initiated by the RAN.

However, because the terminal device needs to detect, based on different periodicities, the paging message initiated by the core network and the paging message initiated by the access network, the terminal device needs to frequently wake up, resulting in increased power consumption and reduced standby time.

In conclusion, how to flexibly configure the power saving mode of the terminal device to improve the communication performance while reducing the power consumption becomes an urgent technical problem to be resolved.

To resolve the technical problem, embodiments of this application provide a communication method. In the method, a terminal device may obtain first indication information, where the first indication information indicates the terminal device to initiate access to a network or monitor a paging message after a power saving duration, and the first indication information includes power saving duration information; and initiate the access to the network or monitor the paging message after the power saving duration based on the first indication information.

In embodiments of this application, the first indication information may flexibly indicate an operation (for example, initiating the access to the network or monitoring the paging message) performed by the terminal device after the power saving duration, so that communication performance can be improved while power consumption of the terminal device is reduced, and further, complexity of power saving configuration can be reduced.

The following describes implementations of embodiments of this application in detail with reference to accompanying drawings in this specification.

The communication method provided in embodiments of this application may be applied to any communication system. The communication system may be a third generation partnership project (third generation partnership project, 3GPP) communication system, for example, a radio frequency identification (radio frequency identification, RFID) system, a long term evolution (long term evolution, LTE) system, a fifth generation (fifth generation, 5G) mobile communication system, a new radio (new radio, NR) communication system, or a vehicle to everything (vehicle to everything, V2X) system. The communication method may be further applied to a system in which LTE and 5G hybrid networking is used, a non-terrestrial communication network (non-terrestrial network, NTN) system, a device-to-device (device-to-device, D2D) communication system, a machine-to-machine (machine-to-machine, M2M) communication system, an internet of things (internet of things, IoT) system, an ambient internet of things (ambient IoT, A-IoT) system, a universal mobile telecommunications system (universal mobile telecommunications system, UMTS), a code division multiple access (code division multiple access, CDMA) system, another next-generation communication system, for example, a future communication system like 6G, a non-3GPP communication system like a wireless local area network (wireless local area network, WLAN), or the like. This is not limited.

For example, the communication method provided in embodiments of this application may be applied to an ultra-low power consumption communication scenario, for example, a communication scenario in which power consumption is below a milliwatt level or at a microwatt level, for example, an RFID scenario, an A-IoT scenario, or an X-IoT (where X may be a passive or semi-passive internet of things) scenario.

An RFID system is a non-contact automatic identification system, is mainly used for identity identification, and may further be used for user data reading and writing. The RFID system may usually include a reader (Reader) and a tag (Tag). The reader may exchange information with the electronic tag, to manage the tag. For example, the reader may read information in the tag, or write information that needs to be stored in the tag into the tag. Non-contact data communication is performed between the reader and the tag.

The tag may also be referred to as the electronic tag or an RFID tag, and may be classified into a passive tag (passive tag), a semi-passive tag (semi-passive tag), and an active tag (active tag).

The passive tag consumes power at a level of about 1 µW. The passive tag has no energy storage capability, and all the energy required for operations of the passive tag (for example, receiving and sending signals) is from radio frequency energy of the reader. In other words, the tag can convert radio signals sent by the reader into energy and use the energy to drive the passive tag to work. Uplink transmission of the passive tag depends on backscatter communication. The reader sends a carrier signal to trigger the passive tag to send a backscattered signal, and sends an uplink signal to the reader by using radio frequency energy. For example, a part of energy of a continuous wave (continuous wave, CW) sent by the reader may be used for internal processing such as encoding/decoding and modulation/demodulation of the tag. In addition, the continuous wave may be further used as a carrier to carry uplink information of the tag. The passive tag may also be referred to as a passive internet of things (passive internet of things, passive IoT) device.

The semi-passive tag consumes power at a level of about 100 µW, and can incorporate an internal battery to power internal processing such as encoding/decoding and modulation/demodulation. In other words, compared with the passive tag, the semi-passive tag may store a part of energy (for example, by using the battery or a capacitor), and transmit power consumption of the semi-passive tag may be greater than that of the passive tag. Communication of the semi-passive tag also depends on the backscatter communication, that is, the continuous wave of the reader is required as the carrier, but communication capability (for example, a transmission rate) of the semi-passive tag is better than that of the passive tag.

The active tag consumes power at a level of about 50 mW. The active tag has a battery and can actively send a signal without depending on a backscattered signal for communication, and therefore has stronger communication capability.

The tag is simply designed, in which an application layer and air interface signaling may be mixed together to support microwatt-level or 100-microwatt-level power consumption. The tag may perform encoding/decoding and transmission based on an on-off-keying (on-off-keying, OOK) modulation scheme, for example, decode data based on an amplitude modulation scheme and a high/low level. In multi-tag communication, a time division multiplexing manner may be used, and a plurality of tags use a serial reading mode.

The reader may be a device having a read/write function, for example, may be a handheld or fixed device for reading or writing tag information. Alternatively, the reader may be understood as a device communicating with the tag, and may be in a form of a terminal device, a network device, a device having a read/write function, an integrated access and backhaul (integrated access and backhaul, IAB) node, or the like. This is not limited.

In the RFID system, the reader may perform operations such as selection (select), inventory (inventory), and access (access) on the tag. The selection operation is for selecting one tag or a group of tags for inventory and access. The inventory operation may be understood as a process in which the reader identifies the tag, and an inventory rate of the RFID tag is an important performance indicator. The access operation may be understood as a process in which the reader interacts with the tag. The tag needs to be identified by the reader before access.

For example, a procedure in which the reader performs selection, inventory, and access on the tag may be shown in FIG. 2. Refer to FIG. 2. The procedure includes the following steps.

Step 201: The reader sends select (Select) signaling.

The select signaling may include tag memory information, and the reader may be used to select one tag or a group of tags for access by sending the select signaling.

Step 202: The reader sends query (Query) signaling/query adjust (Query Adjust) signaling/query response (Query Rep) signaling.

The query signaling is used as an example. The query signaling sent by the reader may be used to initialize an inventory periodicity. The query command may further include a random access resource configuration (for example, a parameter Q), and the tag calculates a maximum quantity of sending slots based on the random access configuration (the parameter Q) and randomly selects an access slot for random access. For example, the random access resource configuration may include a maximum access slot range.

For a plurality of tags selected by the reader, inventory and access may be performed in a time division multiplexing manner. To be specific, after the inventory and the access on a tag are ended, the reader starts to perform inventory and access on a next tag. The following steps are described by using an example of performing inventory and access on one tag.

Step 203: The tag sends a random number (random number, RN) to the reader.

For example, the random number may be a 16-bit random number (RN16).

For example, the tag may calculate a maximum access slot range [0, 2Q-1] based on a value of Q. The tag may randomly select a value in the range, and store the value as a counter (counter). Each time one dedicated signaling query response (QueryRep) is received, counter = counter - 1. When the counter is equal to 0, the tag may send a random number, for example, the RN16.

Step 204: The reader feeds back an acknowledgment (acknowledgment, ACK) message to the tag.

If the reader successfully receives the random number sent by the tag, the reader may send the acknowledgment message to the tag. The acknowledgment message may include the random number sent by the tag to the reader.

Step 205: The tag sends uplink data to the reader.

The tag may send the uplink data to the reader when the random number is matched; otherwise, the tag does not send the uplink data.

For example, the uplink data may be electronic product code (electronic product code, EPC).

Step 206: The reader sends a random number request (Req_RN) to the tag.

The random number request may include the random number sent by the tag to the reader.

Step 207: The tag sends a handle to the reader.

The tag may send the handle to the reader when the random number is matched; otherwise, the tag does not send the handle.

Step 208: The reader sends the handle to the tag.

Step 209: The tag verifies the handle; and if the verification succeeds, the tag makes a response; otherwise, the tag feeds back error code.

Similar to the RFID system, the A-IoT system is based on cellular network communication infrastructure, and includes a network device and a first-type terminal device. Main services include inventory, positioning, sensor reporting, command (command), and the like. It may be understood that the command service may be a service that implements a write (write) process or a lock (lock) process. Typical application scenarios include logistics, warehousing, industrial manufacturing, identity identification, environment monitoring, and the like.

The network device may be a device having a function of the reader, and the first-type terminal device may be a device having a function of the tag. In this case, both the reader and the tag may be implemented based on infrastructure in a cellular network. In other words, both the reader and the tag may be devices in the cellular network. For example, the function of the reader may be implemented by the network device like a base station. The tag may be implemented by a terminal device in the cellular network, for example, an internet of things terminal device with extremely low power consumption and extremely low complexity, that is, the first-type terminal device. Non-contact data communication may be performed between the network device and the first-type terminal device, to read information from the first-type terminal device, and/or write information that needs to be stored into the first-type terminal device.

For example, the inventory service is to use the network device to enable the first-type terminal device in a coverage area to access, and a device that successfully accesses the network device may send a unique identifier (which is identifiable by the network device, and is, for example, an EPC in RFID) of the device to the network device. The positioning service may be positioning a location of the first-type terminal device by using some positioning signals. The sensor service may be that the first-type terminal device reports sensor data, such as temperature data, to the network device. The command service may be some operation instructions, such as write and lock. A write procedure may be that the network device sends a downlink instruction and data, to indicate the first-type terminal device to write the data into a memory (memory) bank of the first-type terminal device. A lock procedure may be that the network device sends a downlink instruction, to indicate the first-type terminal device to lock a location of a specified address (address) of the memory bank, and content of the memory bank cannot be changed or read.

For example, similar to the tag in the RFID system, the first-type terminal device may be classified into three types: a device A (device A) similar to the passive tag, a device B (device B) similar to the semi-passive tag, and a device C (device C) similar to the active tag.

It may be understood that the foregoing communication systems and communication scenarios applicable to this application are merely examples for description, and communication systems applicable to this application are not limited thereto. This applies throughout and will not be repeated below.

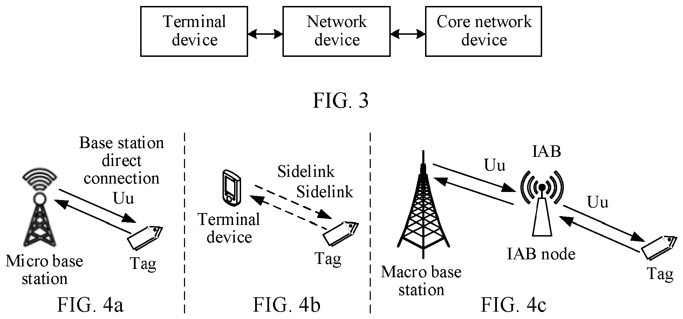

The following uses FIG. 3 as an example to describe a communication system provided in an embodiment of this application.

FIG. 3 is a diagram of a communication system according to an embodiment of this application. As shown in FIG. 3, the communication system may include a terminal device, a network device, and a core network device.

In FIG. 3, the terminal device may be located in a coverage area of one or more cells (or carriers) provided by the network device, and there may be one or more cells serving the terminal device. When there are a plurality of cells serving the terminal device, the terminal device may operate in a carrier aggregation (carrier aggregation, CA), dual connectivity (dual connectivity, DC), or coordinated multipoint transmission manner, and at least one cell provides more than one numerology (numerology) and provides a radio resource for the terminal device.

The terminal device may perform air interface communication with the network device through an uplink (uplink, UL) or a downlink (downlink, DL). For example, the terminal device may send uplink data to the network device in an UL direction through a physical uplink shared channel (physical uplink shared channel, PUSCH), and the network device may send downlink data to the terminal device in a DL direction through a physical downlink shared channel (physical downlink shared channel, PDSCH).

Optionally, the terminal device may be a passive terminal device. To be specific, energy and a carrier that are needed when the terminal device operates may be provided by the network device.

Optionally, the network device in this application may be used as a reader, or the network device may implement a function of the reader. The terminal device may be used as a tag, or the terminal device may be a device including the tag. The terminal device may also implement a function of the reader. The reader may be understood as another type of terminal device. The tag may be located in a coverage area provided by the reader. When the reader is a terminal device, communication between the reader and the tag may be considered as transmission between terminal devices. When the reader is a network device, communication between the reader and the tag is Uu interface communication, namely, air interface communication.

Optionally, the terminal device in FIG. 3 may be a device having a wireless transceiver function, or a chip or a chip system that may be disposed in the device, and may be configured to provide voice and/or data connectivity for a user. The terminal device may also be referred to as user equipment (user equipment, UE), a terminal (terminal), a mobile station (mobile station, MS), a mobile terminal (mobile terminal, MT), or the like. For example, the terminal device in FIG. 3 may be a handheld device or a vehicle-mounted device that has a wireless connection function, for example, a mobile phone (mobile phone), a tablet computer, a notebook computer, a palmtop computer, or a computer having a wireless transceiver function. The terminal device may alternatively be a mobile internet device (mobile internet device, MID), a wearable device, a virtual reality (virtual reality, VR) terminal, an augmented reality (augmented reality, AR) terminal, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), a vehicle-mounted terminal, a vehicle with vehicle-to-vehicle (vehicle-to-vehicle, V2V) communication capability, an intelligent connected vehicle, an uncrewed aerial vehicle with uncrewed aerial vehicle-to-uncrewed aerial vehicle (UAV to UAV, U2U) communication capability, or the like. This is not limited.

Optionally, the network device in FIG. 3 may be any device that is deployed in an access network and that can perform wireless communication with the terminal device, and is mainly configured to implement functions such as radio physical control, resource scheduling and radio resource management, radio access control, and mobility management. Specifically, the network device may be a device supporting wired access, or may be a device supporting wireless access. For example, the network device may be an access network (access network, AN) device/a radio access network (radio access network, RAN) device, and includes a plurality of AN/RAN nodes. The AN/RAN node may be a NodeB (NodeB, NB), a macro base station, a micro base station, a relay station, an enhanced NodeB (enhanced NodeB, eNB), a next generation NodeB (NR NodeB, gNB), a radio network controller (radio network controller, RNC), a base station controller (base station controller, BSC), a base transceiver station (base transceiver station, BTS), a home base station (for example, a home evolved NodeB (home evolved NodeB) or a home NodeB (home NodeB, HNB)), a baseband unit (baseband unit, BBU), an access point (access point, AP), a wireless fidelity AP (wireless fidelity AP, Wi-Fi AP), a transmission reception point (transmission reception point, TRP), a transmission point (transmission point, TP), a wireless relay node, a wireless backhaul node (namely, an IAB node) in integrated access and backhaul (integrated access and backhaul, IAB), another type of access node, a reader, a read apparatus, or the like. This is not limited.

For another example, the network device may include a baseband unit (baseband unit, BBU) and a remote radio unit (remote radio unit, RRU). The BBU and RRU may be deployed in different places. For example, the RRU is remotely deployed in a high-traffic area, and the BBU is deployed in a central equipment room. Alternatively, the BBU and the RRU may be placed in a same equipment room. Alternatively, the BBU and the RRU may be different components at a same rack.

In still another example, alternatively, the network device may be a device including a central unit (central unit, CU) node, including a distributed unit (distributed unit, DU) node, or including a CU node and a DU node. For example, the network device may be divided into a CU and a DU from a perspective of logical functions. Some protocol layer functions are centrally controlled by the CU, and some or all of remaining protocol layer functions are distributed in the DU, and the CU centrally controls the DU. The CU and the DU may be separately disposed, or may be included in a same network element, for example, a BBU. Further, the central unit CU may be divided into a control plane (CU-CP) and a user plane (CU-UP).

In still another example, the network device may alternatively be a radio unit (radio unit, RU) or a device including a CU, a DU, and an RU. The RU may be included in a radio frequency device or a radio frequency unit, for example, included in an RRU, an active antenna unit (active antenna unit, AAU), or a remote radio head (remote radio head, RRH).

It may be understood that in different systems, the CU (or the CU-CP and the CU-UP), the DU, or the RU may also have different names, but a person skilled in the art may understand meanings thereof. For example, in an open radio access network (open radio access network, O-RAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

Based on the foregoing descriptions of the terminal device and the network device, in a possible example, as shown in FIG. 4a, the base station may be a micro base station (Micro BS), and the micro base station may communicate with a tag through a Uu interface. As shown in FIG. 4b, the terminal device may communicate with a tag through a sidelink (sidelink, SL). As shown in FIG. 4c, the base station may be an IAB node, and the IAB node may communicate with a macro base station (Macro BS) through a Uu interface, and communicate with a tag through a Uu interface.

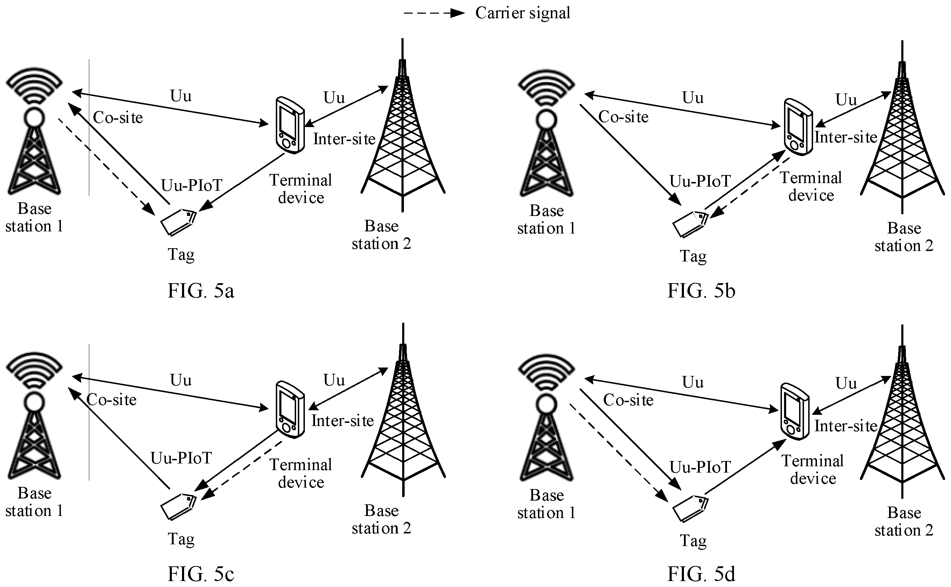

In a second possible example, a split architecture may alternatively be supported in communication between the terminal device and the network device. As shown in FIG. 5a to FIG. 5d, the terminal device may perform uplink communication or downlink communication with the base station. As shown in FIG. 5a, a base station 1 may provide a carrier signal for a tag, the base station 1 may perform uplink communication with the tag, and the tag may perform downlink communication with the terminal device. Alternatively, as shown in FIG. 5b, the terminal device may provide a carrier signal for a tag, a base station 1 may perform downlink communication with the tag, and the tag may perform uplink communication with the terminal device. Alternatively, as shown in FIG. 5c, the terminal device may provide a carrier signal for a tag, a base station 1 may perform uplink communication with the tag, and the tag may perform downlink communication with the terminal device. Alternatively, as shown in FIG. 5d, a base station 1 may provide a carrier signal for a tag, the base station 1 may perform downlink communication with the tag, and the tag may perform uplink communication with the terminal device.

It may be understood that, in FIG. 5a to FIG. 5d, a base station that can communicate with both the tag and the terminal device may be referred to as a co-site (for example, the base station 1) between the tag and the terminal device. A base station that can only communicate with the tag, or a base station that can only communicate with the terminal device may be referred to as an inter-site (for example, a base station 2) between the tag and the terminal device.

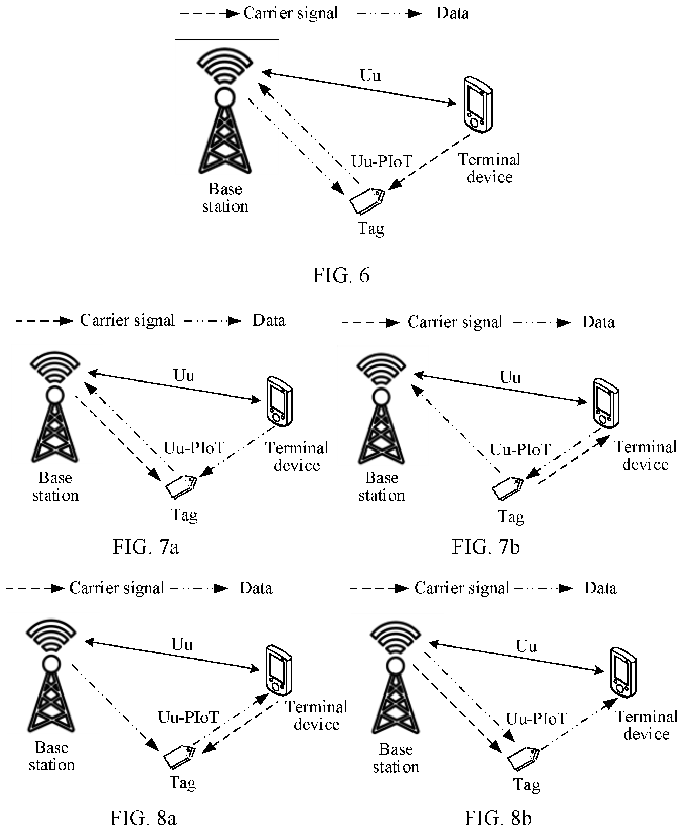

In a third possible example, a direct connection architecture of an A-IoT system may alternatively be supported between the terminal device and the network device. As shown in FIG. 6, the terminal device may be used as a helper (helper) to provide a carrier signal for a tag. Uplink communication or downlink communication may be performed between a base station and the tag, to implement data transmission, and the base station may perform uplink communication or downlink communication with the terminal device.

In a fourth possible example, a split architecture of an A-IoT system may alternatively be supported between the terminal device and the network device. In the architecture, uplink and downlink data links of a tag may be decoupled. As shown in FIG. 7a, a base station may serve as a helper to provide a carrier signal for the tag. Downlink data of the tag may be from the terminal device, and uplink data of the tag may be sent to the base station, to implement data transmission. The terminal device may also perform uplink or downlink communication with the base station. Alternatively, as shown in FIG. 7b, the terminal device may serve as a helper to provide a carrier signal for the tag. Downlink data of the tag may be from the terminal device, and uplink data of the tag may be sent to a base station, to implement data transmission. The terminal device may also perform uplink or downlink communication with the base station.

In a fifth possible example, a terminal device-assisted uplink architecture of an A-IoT system may alternatively be supported between the terminal device and the network device. The architecture is also a split architecture, and uplink and downlink data links of a tag may be decoupled. As shown in FIG. 8a, the terminal device may serve as a helper to provide a carrier signal for a tag. Downlink data of the tag may be from a base station, uplink data of the tag may be sent to the terminal device, and the terminal device may also perform uplink communication or downlink communication with the base station. Alternatively, as shown in FIG. 8b, a base station may serve as a helper to provide a carrier signal for a tag. Downlink data of the tag may be from the base station, uplink data of the tag may be sent to the terminal device, and the terminal device may also perform uplink communication or downlink communication with the base station.

Optionally, the core network device in FIG. 3 may be a general term of a plurality of functional entities used for user management, data transmission, and network device configuration.

For example, the core network device may include a mobility management network element, a session management network element, a user plane network element, an authentication server function network element, and a tag management function network element. This is not limited. The mobility management network element may be an access and mobility management function (access and mobility management function, AMF). The session management network element may be a session management function (session management function, SMF). The user plane network element may be a user plane function (user plane function, UPF). The authentication server function network element may be an authentication server function (authentication server function, AUSF). The tag management function network element may be a tag management function (tag management function, TMF).

The tag management function network element may be a network element used for the A-IoT, may manage related procedures such as inventory of an A-IoT device, and may be connected to the terminal device through transparent transmission of the mobility management network element, or may be directly connected to the terminal device (equivalent to replacing the mobility management network element).

It may be understood that the terminal device, the network device, and the core network device in embodiments of this application each may be one or more chips, or may be a system on chip (system on chip, SoC), or the like. FIG. 3 is merely an example accompany drawing, and a quantity of included devices is not limited. In addition, in addition to the devices shown in FIG. 3, the communication system may further include another device. Names of the devices and links in FIG. 3 are not limited. In addition to the names shown in FIG. 3, the devices and the links may further have other names. This is not limited.

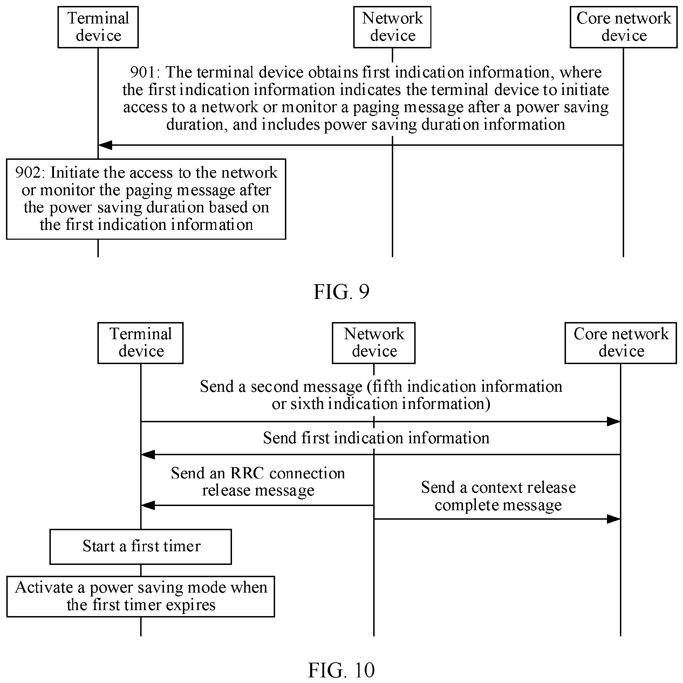

With reference to any communication system shown in FIG. 3 to FIG. 8a and FIG. 8b, a communication method provided in an embodiment of this application is described with reference to FIG. 9. A terminal device may be any terminal device in the communication system shown in FIG. 3 to FIG. 8a and FIG. 8b, a network device may be any network device in the communication system shown in FIG. 3 to FIG. 8a and FIG. 8b, and a core network device may be any core network device in the communication system shown in FIG. 3. Processing performed by a single execution body (the terminal device, the network device, or the core network device) shown in this embodiment of this application may alternatively be performed by a plurality of execution bodies. These execution bodies may be logically and/or physically separated. This is not limited.

FIG. 9 shows a communication method according to an embodiment of this application. As shown in FIG. 9, the method may include the following steps.

Step 901: The terminal device obtains first indication information.

The first indication information indicates the terminal device to initiate access to a network or monitor a paging message after a power saving duration. The first indication information includes power saving duration information. That the first indication information indicates the terminal device to initiate the access to the network or monitor the paging message after the power saving duration may be understood as that the first indication information may include the power saving duration information, and includes descriptions of the terminal device initiating the access to the network or monitoring the paging message after the power saving duration. Alternatively, it may be understood as that the first indication information includes the power saving duration, and indirectly indicates the terminal device to initiate the access to a network device or monitor the paging message after the power saving duration. In this case, an action initiated by the terminal device after the power saving duration may be predefined in a communication protocol. To be specific, the terminal device may determine the power saving duration based on the received first indication information, and initiate the access to the network or monitor the paging message after the power saving duration according to the predefinition in the communication protocol. A specific manner is not limited in this application.

The power saving duration may also be described as a timer (timer) duration, an eDRX cycle (eDRX cycle), a DRX cycle (DRX cycle), a paging cycle (paging cycle), or the like. This is not limited.

The paging message may be used to select one terminal device, a plurality of terminal devices, one group of terminal devices, or one type of terminal devices, or may be described as that the paging message is used to trigger one terminal device, a plurality of terminal devices, one group of terminal devices, or one type of terminal devices to access the network. This is not limited.

That the first indication information indicates the terminal device to monitor the paging message after the power saving duration may also be described as that the first indication information indicates that a paging message from a network device/core network device is to be sent after the power saving duration.

Specifically, the terminal device may receive the first indication information from the core network device.

For example, the core network device may be one or more of the following: a mobility management network element, an authentication server function network element, a tag management function network element, and the like. This is not limited.

Optionally, the core network device may include the first indication information in a first message. In an implementation, the first message may be a message, for example, a downlink NAS message, a registration accept message, or a TAU accept message, transparently transmitted by the core network device to the terminal device via the network device. In another implementation, the first message may alternatively be a message (for example, an N2 message) sent by the core network device to the network device. The network device may send the first indication information in the first message to the terminal device through a downlink message (for example, an RRC message, a connection release message, an uplink data feedback message, or a random access response message).

The core network device and the network device may communicate with each other through an N2 interface or another interface. The another interface may be an interface that can implement interaction between the network device and the core network device. For example, the another interface may be an interface that can implement interaction between the network device and the tag management function network element, or may be an interface that can implement interaction between the network device and the authentication server function network element. This is not limited.

Optionally, the core network device or the network device may alternatively send the first indication information to the terminal device through one or more of the following messages: a paging message, a system message, a synchronization message, a release message (for example, an RRC release message, an AS release message, a connection release message, or a service release message), an access occasion trigger message, a unicast message, a broadcast message, or a non-access stratum (non-access stratum, NAS) message.

In a first possible implementation, when the first indication information indicates the terminal device to initiate the access to the network after the power saving duration, second indication information may further indicate whether to periodically initiate the access to the network (or described as that the second indication information indicates whether to enable periodic wake-up), or the second indication information indicates to periodically initiate the access to the network (or described as that the second indication information indicates to enable periodic wake-up), or the second indication information indicates to aperiodically initiate the access to the network (or described as that the second indication information indicates not to enable periodic wake-up).

The second indication information may be indication information different from the first indication information, or the second indication information may be the first indication information. To be specific, the first indication information further indicates whether to periodically initiate the access to the network (or described as that the first indication information further indicates whether to enable periodic wake-up), or the first indication information further indicates periodically initiate the access to the network (or described as that the first indication information further indicates to enable periodic wake-up), or the first indication information further indicates to aperiodically initiate the access to the network (or described as that the first indication information further indicates not to enable periodic wake-up). It may be understood that the first indication information and the second indication information may be carried in a same message, or may be carried in different messages. This is not limited.

The terminal device may obtain the second indication information, and determine, based on the second indication information, whether to periodically initiate the access to the network (or determine, based on the second indication information, whether to enable periodic wake-up), or determine, based on the second indication information, to periodically initiate the access to the network (or determine, based on the second indication information, to enable periodic wake-up), or determine, based on the second indication information, to aperiodically initiate the access to the network (or determine, based on the second indication information, not to enable periodic wake-up).

The wake-up may mean that the terminal device starts to receive or detect or discontinuously receives/detects a message after waking up, or may mean that the terminal device sends a message after waking up. When the terminal device is in a non-awake state (for example, a sleep state), the terminal device does not receive or detect a message.

It may be understood that, after waking up, the terminal device may keep message monitoring/receiving/detection until a message is monitored/received/detected; or after waking up, the terminal device may periodically monitor/receive/detect a message. Specific selection may be configured by the network device, or may be determined by the terminal device, and is not limited. A periodicity of monitoring/receiving/detecting a message by the terminal device may be specified in a protocol, or may be configured by the network device. This is not limited.

When the network device configures a message carrying the foregoing content, the message may be configured in existing downlink signaling, or may be configured in a periodically sent signal, for example, a system message or a periodically sent MAC message. This is not limited.

Optionally, the terminal device may turn on a receiver when waking up, and start to receive or detect or discontinuously receive/detect a message.

Optionally, when the terminal device actively initiates a service (for example, an MO service), the terminal device may alternatively wake up autonomously to send or receive data.

In a possible design, the second indication information may be 1-bit indication information. When a value of the 1 bit is 1, it indicates that the second indication information indicates to enable periodic wake-up; or when a value of the 1 bit is 0, it indicates that the second indication information indicates not to enable periodic wake-up. Alternatively, when a value of the 1 bit is 0, it indicates that the second indication information indicates to enable periodic wake-up; or when a value of the 1 bit is 1, it indicates that the second indication information indicates not to enable periodic wake-up.

In another possible design, when the second indication information is defined as indicating to enable periodic wake-up, if the terminal device obtains the second indication information, it indicates to enable periodic wake-up; or if the terminal device does not obtain the second indication information (for example, the terminal device does not obtain the second indication information within preset time), it implicitly indicates not to enable periodic wake-up. Alternatively, when the second indication information is defined as indicating not to enable periodic wake-up, if the terminal device obtains the second indication information, it indicates not to enable periodic wake-up; or if the terminal device does not obtain the second indication information (for example, the terminal device does not obtain the second indication information within preset time), it implicitly indicates to enable periodic wake-up.

In another possible design, the second indication information may alternatively indirectly indicate, by indicating a time periodicity of periodic wake-up, to enable periodic wake-up.

In another possible design, the second indication information may alternatively indirectly indicate, by indicating next wake-up time, to enable periodic wake-up.

The second indication information may be time position information of next wake-up, and the time position information may indicate a frame number corresponding to wake-up time of the terminal device, for example, an xx^{th} frame (or subframe or hyperframe), or may indicate an xx^{th} slot, or may indicate moment information (for example, HH:MM:SS), or the like. This is not limited.

In another possible design, the second indication information may alternatively indicate the terminal device to wake up after a time period, to indirectly indicate to enable periodic wake-up.

A time unit of the time period indicated by the second indication information may be a frame, a subframe, or a hyperframe, for example, xx frames (or subframes or hyperframes); or may be a slot, for example, xx slots; or may be absolute time, for example, xx seconds or xx milliseconds; or may be moment information (for example, HH:MM:SS) or the like. This is not limited.

In another possible design, indication information indicating whether to enable periodic TAU may alternatively be reused as the second indication information. When the indication information indicates to enable periodic TAU, it indicates that the second indication information indicates to enable periodic wake-up. When the indication information indicates not to enable the periodic TAU, it indicates that the second indication information indicates not to enable periodic wake-up.

In still another possible design, when the second indication information indicates to enable periodic wake-up, it may also be considered that the second indication information indicates to enable periodic TAU; or when the second indication information indicates not to enable periodic wake-up, it may also be considered that the second indication information indicates not to enable periodic TAU.

Optionally, the second indication information may be determined by the core network device and sent to the terminal device, or the second indication information may be determined by the network device and sent to the terminal device. This is not limited. For descriptions of sending the second indication information by the core network device or the network device to the terminal device, refer to the foregoing related descriptions of sending the first indication information by the core network device or the network device to the terminal device. Details are not described herein.

In a second possible implementation, when the first indication information indicates the terminal device to monitor the paging message after the power saving duration, third indication information may further indicate whether to periodically monitor the paging message (or described as that the third indication information indicates whether to enable periodic wake-up), or the third indication information indicates to periodically monitor the paging message (or described as that the third indication information indicates to enable periodic wake-up), or the third indication information indicates to aperiodically monitor the paging message (or described as that the third indication information indicates not to enable periodic wake-up).

The third indication information may be indication information different from the first indication information, or the third indication information may be the first indication information. To be specific, the first indication information further indicates whether to periodically monitor the paging message (or described as that the first indication information further indicates whether to enable periodic wake-up), or the first indication information further indicates to periodically monitor the paging message (or described as that the first indication information further indicates to enable periodic wake-up), or the first indication information further indicates to aperiodically monitor the paging message (or described as that the first indication information further indicates not to enable periodic wake-up). It may be understood that the first indication information and the third indication information may be carried in a same message, or may be carried in different messages. This is not limited.

The first indication information or the third indication information may alternatively be described as follows: The first indication information/the third indication information indicates whether to periodically send the paging message, or the first indication information/the third indication information indicates to periodically send the paging message, or the first indication information/the third indication information indicates to aperiodically send the paging message.

The terminal device may obtain the third indication information, and determine, based on the third indication information, whether to periodically monitor the paging message (or determine, based on the third indication information, whether to enable periodic wake-up), or determine, based on the third indication information, to periodically monitor the paging message (or determine, based on the third indication information, to enable periodic wake-up), or determine, based on the third indication information, to aperiodically monitor the paging message (or determine, based on the third indication information, not to enable periodic wake-up).

The wake-up may mean that the terminal device starts to receive or detect or discontinuously receives/detects a message after waking up, or may mean that the terminal device sends a message after waking up. When the terminal device is in a non-awake state (for example, a sleep state), the terminal device does not receive or detect a message.

It may be understood that, after waking up, the terminal device may keep message monitoring/receiving/detection until a message is monitored/received/detected; or after waking up, the terminal device may periodically monitor/receive/detect a message. Specific selection may be configured by the network device, or may be determined by the terminal device, and is not limited. A periodicity of monitoring/receiving/detecting a message by the terminal device may be specified in a protocol, or may be configured by the network device. This is not limited.

When the network device configures a message carrying the foregoing content, the message may be configured in existing downlink signaling, or may be configured in a periodically sent signal, for example, a system message or a periodically sent MAC message. This is not limited.

Optionally, the terminal device may turn on a receiver when waking up, and start to receive or detect or discontinuously receive/detect a message.

Optionally, when the terminal device actively initiates a service (for example, an MO service), the terminal device may alternatively wake up autonomously to send or receive data.

In a possible design, the third indication information may be 1-bit indication information. When a value of the 1 bit is 1, it indicates that the third indication information indicates to enable periodic wake-up; or when a value of the 1 bit is 0, it indicates that the third indication information indicates not to enable periodic wake-up. Alternatively, when a value of the 1 bit is 0, it indicates that the third indication information indicates to enable periodic wake-up; or when a value of the 1 bit is 1, it indicates that the third indication information indicates not to enable periodic wake-up.

In another possible design, when the third indication information is defined as indicating to enable periodic wake-up, if the terminal device obtains the third indication information, it indicates to enable periodic wake-up; or if the terminal device does not obtain the third indication information (for example, the terminal device does not obtain the third indication information within preset time), it implicitly indicates not to enable periodic wake-up. Alternatively, when the third indication information is defined as indicating not to enable periodic wake-up, if the terminal device obtains the third indication information, it indicates not to enable periodic wake-up; or if the terminal device does not obtain the third indication information (for example, the terminal device does not obtain the third indication information within preset time), it implicitly indicates to enable periodic wake-up.

In another possible design, the third indication information may alternatively indirectly indicate, by indicating a time periodicity of periodic wake-up, to enable periodic wake-up.

In another possible design, the third indication information may alternatively indirectly indicate, by indicating next wake-up time, to enable periodic wake-up.

The third indication information may be time position information of next wake-up, and the time position information may indicate a frame number corresponding to wake-up time of the terminal device, for example, an xx^{th} frame (or subframe or hyperframe), or may indicate an xx^{th} slot, or may indicate moment information (for example, HH:MM:SS), or the like. This is not limited.

In another possible design, the third indication information may alternatively indicate the terminal device to wake up after a time period, to indirectly indicate to enable periodic wake-up.

A time unit of the time period indicated by the third indication information may be a frame, a subframe, or a hyperframe, for example, xx frames (or subframes or hyperframes); or may be a slot, for example, xx slots; or may be absolute time, for example, xx seconds or xx milliseconds; or may be moment information (for example, HH:MM:SS) or the like. This is not limited.

In another possible design, indication information indicating whether to enable periodic TAU may alternatively be reused as the third indication information. When the indication information indicates to enable periodic TAU, it indicates that the third indication information indicates to enable periodic wake-up. When the indication information indicates not to enable the periodic TAU, it indicates that the third indication information indicates not to enable periodic wake-up.

In still another possible design, when the third indication information indicates to enable periodic wake-up, it may also be considered that the third indication information indicates to enable periodic TAU; or when the third indication information indicates not to enable periodic wake-up, it may also be considered that the third indication information indicates not to enable periodic TAU.

Optionally, the third indication information may be determined by the core network device and sent to the terminal device, or the third indication information may be determined by the network device and sent to the terminal device. This is not limited. For descriptions of sending the third indication information by the core network device or the network device to the terminal device, refer to the foregoing related descriptions of sending the first indication information by the core network device or the network device to the terminal device. Details are not described herein.

Based on the foregoing two possible implementations, optionally, the terminal device may further obtain fourth indication information, where the fourth indication information indicates a periodicity of initiating the access to the network or monitoring the paging message. Alternatively, the terminal device may determine the power saving duration indicated by the first indication information as a periodicity of initiating the access to the network or monitoring the paging message. It may be understood that the first indication information and the fourth indication information may be carried in a same message, or may be carried in different messages. This is not limited.

The fourth indication information may be determined by the core network device and sent to the terminal device, or the fourth indication information may be determined by the network device and sent to the terminal device. This is not limited. For descriptions of sending the fourth indication information by the core network device or the network device to the terminal device, refer to the foregoing related descriptions of sending the first indication information by the core network device or the network device to the terminal device. Details are not described herein.

Optionally, before the core network device sends the first indication information to the terminal device, as shown in FIG. 10, the terminal device may send a second message to the core network device, to request to obtain power saving configuration information. The core network device may send the power saving configuration information (for example, the first indication information) to the terminal device based on the second message.

When sending the second message to the core network device, the terminal device may include the second message in a message that can be transparently transmitted to the core network device via the network device, for example, include the second message in one or more of the following: an uplink NAS message, a registration request message, a TAU request message, and the like, to transparently transmit the second message to the core network device via the network device. Alternatively, the terminal device may include the second message in an uplink message (for example, an RRC message, a connection release request message, or a random access request message) sent to the network device. When receiving the uplink message, the network device may include the second message in the uplink message in a message (for example, an N2 message) sent to the core network device, so that the core network device obtains, based on the message sent by the network device, the second message sent by the terminal device.

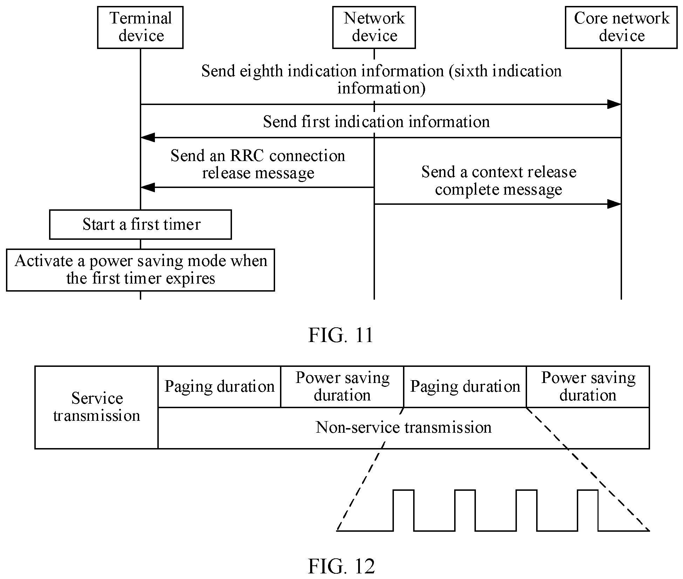

In a first possible implementation, before the core network device sends the first indication information to the terminal device, as shown in FIG. 11, the terminal device may further send eighth indication information to the core network device, where the eighth indication information may be used to request to reuse a TAU cycle as the power saving duration.

If the core network device determines that the TAU cycle can be reused as the power saving duration of the terminal device, the core network device may indicate, by using the first indication information (or the second indication information), to periodically initiate the access to the network (or indicate to enable periodic wake-up), or indicate, by using the first indication information (or the third indication information), to periodically monitor the paging message (or indicate to enable periodic wake-up), to implicitly indicate that a TAU duration can be reused as the power saving duration of the terminal device. Alternatively, if the core network device determines that the TAU cycle cannot be reused as the power saving duration of the terminal device, the core network device may indicate, by using the first indication information (or the second indication information), to aperiodically initiate the access to the network (or indicate not to enable periodic wake-up), or indicate, by using the first indication information (or the third indication information), to aperiodically monitor the paging message (or indicate not to enable periodic wake-up), to indicate that the TAU cycle cannot be reused as the power saving duration of the terminal device.

Optionally, when sending the eighth indication information to the core network device, the terminal device may include the eighth indication information in a message that can be transparently transmitted to the core network device via the network device, for example, include the eighth indication information in one or more of the following: an uplink NAS message, a registration request message, a TAU request message, and the like, to transparently transmit the eighth indication information to the core network device via the network device. Alternatively, the terminal device may include the eighth indication information in an uplink message (for example, an RRC message, a connection release request message, or a random access request message) sent to the network device. When receiving the uplink message, the network device may include the eighth indication information in the uplink message in a message (for example, an N2 message) sent to the core network device, so that the core network device obtains, based on the message sent by the network device, the eighth indication information sent by the terminal device.

In a possible design, for descriptions of the TAU cycle, refer to related descriptions of the TAU cycle request timer configuration in FIG. 1. To be specific, the terminal device may obtain, in a registration request procedure or a TAU request procedure, the TAU cycle request timer configuration sent by the core network device, to determine the TAU cycle.

In another possible design, the core network device or the network device may send ninth indication information to the terminal device, where the ninth indication information may indicate the TAU cycle.

For descriptions of sending the ninth indication information by the core network device to the terminal device, refer to the foregoing related descriptions of sending the first indication information by the core network device to the terminal device. Details are not described herein.

Optionally, the ninth indication information may include hyperframe information corresponding to the TAU cycle; or the ninth indication information may include absolute duration information of the TAU cycle.

The hyperframe information may include a quantity of hyperframes corresponding to the TAU cycle. Absolute duration may be configured in hours, minutes, or the like.

Optionally, when the TAU cycle is less than or equal to a first threshold, the ninth indication information includes the hyperframe information corresponding to the TAU cycle. Alternatively, when the TAU cycle is greater than a first threshold, the ninth indication information includes the absolute duration information corresponding to the TAU cycle.

The first threshold may be a duration of M hyperframes, M may be a maximum value (for example, 1024) that can indicate a quantity of hyperframes, and M is a positive integer.

In a second possible implementation, different from the first possible implementation in which the terminal device sends the eighth indication information to the core network device, to request to reuse the TAU cycle as the power saving duration, the power saving duration may alternatively be determined based on a service periodicity of the terminal device. For example, the service periodicity of the terminal device may be determined as the power saving duration.

For example, a service of the terminal device may be one or more of the following: a paging service, an inventory service, a sensing service, a positioning service, a command service (for example, a service that implements a read procedure, a write procedure, or a lock procedure), and a sensor service. This is not limited.

Optionally, the core network device may determine the power saving duration based on the service periodicity of the terminal device, and indicate the power saving duration to the terminal device by using the power saving duration information. Alternatively, the core network device may indicate the service periodicity of the terminal device to the network device, and the network device determines the power saving duration based on the service periodicity of the terminal device, and indicates the power saving duration to the terminal device by using the power saving duration information. In this way, when a service arrives, it can be ensured that the terminal device is in an awake state, thereby ensuring normal running of the service of the terminal device. This ensures both sleep of the terminal device and a downlink service of the terminal device, that is, communication performance can be improved while power consumption of the terminal device is reduced.

The core network device may obtain the service periodicity of the terminal device from an application function network element.

For example, the service of the terminal device is a paging service. The core network device may determine the power saving duration based on a paging cycle of the paging service (for example, determine a paging cycle as the power saving duration), and indicate the power saving duration to the terminal device. Alternatively, the core network device may indicate a paging cycle of the terminal device to the network device, and the network device determines the power saving duration based on the paging cycle, and indicates the power saving duration to the terminal device.

A paging mechanism is deployed in a power saving mode, so that the terminal device can wake up in paging time. This is equivalent to a combination or a unified and flexible configuration of the power saving mode and an eDRX mode. This ensures both sleep of the terminal device and the paging service of the terminal device, that is, communication performance can be improved while power consumption of the terminal device is reduced.

In a third possible implementation, different from the foregoing two possible implementations, the terminal device may alternatively send fifth indication information to the core network device, to indicate a power saving duration that the terminal device expects to obtain. A network side determines the power saving duration based on the fifth indication information.

The terminal device may send the fifth indication information to the core network device, and the core network device determines the power saving duration based on the fifth indication information and indicates the power saving duration to the terminal device. Alternatively, the terminal device may send the fifth indication information to the network device, and the network device determines the power saving duration based on the fifth indication information, and indicates the power saving duration to the terminal device.

Optionally, as shown in FIG. 10, the terminal device may send the fifth indication information to the core network device or the network device through the second message. Alternatively, the terminal device may send the fifth indication information to the core network device or the network device in a manner similar to that in which the terminal device sends the second message to the core network device or the network device. Details are not described herein.

Based on the foregoing descriptions of the power saving duration, optionally, when the core network device/network device indicates the power saving duration to the terminal device by using the power saving duration information, the power saving duration information may include hyperframe information corresponding to the power saving duration, or the power saving duration information may include absolute duration information of the power saving duration.

The hyperframe information may include a quantity of hyperframes corresponding to the power saving duration. Absolute duration may be configured in hours, minutes, or the like.

Optionally, when the power saving duration is less than or equal to a first threshold, the power saving duration information includes the hyperframe information corresponding to the power saving duration. Alternatively, when the power saving duration is greater than a first threshold, the power saving duration information includes the absolute duration information corresponding to the power saving duration.

The first threshold may be a duration of M hyperframes, M may be a maximum value (for example, 1024) that can indicate a quantity of hyperframes, and M is a positive integer.

Optionally, when the power saving duration is less than or equal to the first threshold, the core network device or the network device may configure the power saving duration in an eDRX manner by using the hyperframe information included in the power saving duration information, and the terminal device and the network device may perform paging alignment based on a paging time window (paging time window, PTW).

Optionally, when the power saving duration is greater than a first threshold, the core network device or the network device may configure the power saving duration by using the absolute duration information included in the power saving duration information.

Optionally, the power saving duration information may be expressed in frames, subframes, or hyperframes, for example, xx frames (or subframes or hyperframes); or may be expressed in slots, for example, xx slots; or may be expressed in absolute time, for example, xx seconds or xx milliseconds; or may be moment information (for example, HH:MM:SS) or the like. This is not limited.

Optionally, the core network device may further indicate wake-up time information of the terminal device to the network device, and the network device may perform paging alignment with the terminal device based on the wake-up time of the terminal device. For descriptions of the wake-up time information, refer to the following descriptions of seventh indication information. Details are not described herein.

A duration in which the terminal device is in the power saving mode is less than or equal to the power saving duration.

Optionally, an end moment of the power saving duration may be earlier than or equal to a start moment of the service periodicity of the terminal device. Therefore, when a service of the terminal device arrives, it can be ensured that the terminal device is in the awake state, thereby ensuring normal running of the service of the terminal device, and improving communication performance.

Before a timer corresponding to the power saving duration expires, the terminal device may wake up in advance to perform operations such as synchronization (for example, receiving a synchronization signal) or clock calibration, to prepare for subsequent service receiving.

Step 902: The terminal device initiates the access to the network or monitors the paging message after the power saving duration based on the first indication information.

That the terminal device initiates the access to the network after the power saving duration may include: The terminal device performs tracking area update TAU after the power saving duration; or the terminal device performs periodic TAU after the power saving duration. This is not limited. That the terminal device initiates the access to the network after the power saving duration may be that the terminal device sends an access request or uplink data to the network device, the core network device, or another terminal device, where the access request may be a random access identifier or a random number; or may be that the terminal device is triggered to initiate the access to the network after receiving a downlink message (or since a trigger message is received for a time period), or the terminal device is triggered to initiate the access without depending on a downlink message. This is not limited.

That the terminal device monitors the paging message after the power saving duration may include: The terminal device monitors the paging message in a first time period after the power saving duration, or the terminal device periodically monitors the paging message after the power saving duration; or the terminal device continuously monitors the paging message after the power saving duration. This is not limited.

Optionally, the first time period may be expressed in frames, subframes, or hyperframes, for example, xx frames (or subframes or hyperframes); or may be expressed in slots, for example, xx slots; or may be expressed in absolute time, for example, xx seconds or xx milliseconds; or may be moment information (for example, HH:MM:SS) or the like. This is not limited.

Optionally, a length of the first time period may be indicated by the network device (for example, the length of the first time period is indicated by using one or more of the following indication information: the first indication information, the second indication information, the third indication information, or the fourth indication information), or may be specified in a protocol. This is not limited.

Optionally, a periodicity in which the terminal device monitors the paging message may be the foregoing power saving duration, or may be a periodicity indicated by the network device or the core network device, or may be a DRX cycle. This is not limited.

Specifically, the terminal device may trigger the timer corresponding to the power saving duration when activate the mode, and when the timer corresponding to the power saving duration expires, initiate the access to the network or monitor the paging message.

That the terminal device activates the power saving mode may alternatively be described as that the terminal device enters the power saving mode, described as that the terminal device starts the power saving mode, or described as that the terminal device performs communication in the power saving mode.

The terminal device in the power saving mode may not receive downlink data (or a downlink signal); or the terminal device in the power saving mode may neither receive downlink data (or a downlink signal) nor send uplink data; or a receiver (or a primary receiver) of the terminal device in the power saving mode is in an off (or deep sleep) state, to reduce power consumption of the terminal device.

For a terminal device including a primary receiver and a secondary receiver (or described as a low-power receiver), when the terminal device is in the power saving mode, the primary receiver of the terminal device is in an off state, and the secondary receiver of the terminal device is in an on state. The terminal device may receive some signals with simple designs via the secondary receiver, to improve communication performance of the terminal device while reducing power consumption of the terminal device.

Optionally, before activating the power saving mode, the terminal device may first start a first timer, and the terminal device activates the power saving mode when the first timer expires. Alternatively, the terminal device may activate the power saving mode after completing data transmission, or the terminal device may start a first timer after completing data transmission, and activate the power saving mode when the first timer expires. "When the first timer expires" may be understood as "upon expiry of the first timer", or may be understood as "if the first timer expires".

The core network device or the network device may send configuration information of the first timer to the terminal device, where the configuration information of the first timer may indicate the first timer.

During running of the first timer, the terminal device may normally send uplink data, or receive downlink data or a downlink signal from the network device.

Optionally, before the core network device or the network device sends the configuration information of the first timer to the terminal device, the terminal device may send sixth indication information to the core network device or the network device, where the sixth indication information may indicate a duration, of the first timer, that the terminal device expects to obtain. The core network device or the network device may send the configuration information of the first timer to the terminal device based on the sixth indication information.

Optionally, as shown in FIG. 10, the terminal device may send the sixth indication information to the core network device or the network device through the second message. Alternatively, the terminal device may send the sixth indication information to the core network device or the network device in a manner similar to that in which the terminal device sends the second message to the core network device or the network device. Alternatively, as shown in FIG. 11, the terminal device may send the sixth indication information and the eighth indication information to the core network device or the network device through a same message. Alternatively, the terminal device may send the sixth indication information to the core network device or the terminal device in a manner similar to that in which the terminal device sends the eighth indication information to the core network device or the network device. This is not limited.

Optionally, as shown in FIG. 10 or FIG. 11, when the terminal device completes service transmission, the network device may send an RRC connection release message to the terminal device, or it is described as that after the terminal device completes data processing, an RRC connection is released, and the terminal device enters an idle state. The network device may further send a context release complete message to the core network device; and correspondingly, the core network device receives the context release complete message from the network device. When the terminal device releases the RRC connection to the network device, the terminal device may start the first timer. Alternatively, it may be described as that after exiting a connected state and entering the idle state, the terminal device starts the first timer.

Optionally, during running of the first timer, the terminal device may normally receive a paging message, a downlink trigger message, a selection message, or the like sent by the network device, or may perform RRM measurement or the like.

For example, the first timer may be the active timer in FIG. 1.

Optionally, when the first indication information (or the second indication information) indicates to periodically initiate the access to the network (or enable periodic wake-up), the terminal device may perform periodic tracking area update TAU after the power saving duration. Alternatively, when the first indication information indicates not to enable periodic wake-up, the terminal device may detect a paging message, a downlink trigger message, a selection message, or another downlink message after the power saving duration.

Detecting the paging message, the downlink trigger message, the selection message, or the another downlink message may mean receiving the paging message, the downlink trigger message, the selection message, or the another downlink message, or may mean monitoring the paging message, the downlink trigger message, the selection message, or the another downlink message. Optionally, the terminal device may periodically receive or monitor the paging message, the downlink trigger message, the selection message, or the another downlink message. The periodicity may be configured by the network device or the core network device for the terminal device, and is not limited.

Optionally, the terminal device may start periodic receiving or monitoring after the timer corresponding to the power saving duration expires or when the timer corresponding to the power saving duration just expires.

Optionally, the terminal device may further enter the power saving mode again after performing periodic tracking area update, and a duration in which the terminal device is in the power saving mode is less than or equal to the power saving duration.

Optionally, as shown in FIG. 12, the terminal device may alternatively enter the power saving mode again after detecting the paging message in a paging duration, and a duration in which the terminal device is in the power saving mode is less than or equal to the power saving duration.

Based on the method shown in FIG. 9, the first indication information may flexibly indicate an operation (for example, initiating the access to the network or monitoring the paging message) performed by the terminal device after the power saving duration, so that communication performance can be improved while power consumption of the terminal device is reduced, and further, complexity of power saving configuration can be reduced.

Based on the foregoing descriptions, optionally, the core network device may further send tenth indication information to the terminal device, where the tenth indication information indicates a wake-up duration of the terminal device.

The terminal device is in the awake state in the wake-up duration, and the terminal device may perform periodic tracking area update in the awake state, or detect the paging message, the downlink trigger message, the selection message, or the another downlink message in the awake state.

It may be understood that a feature "the core network device sends the tenth indication information to the terminal device" may be used in combination with the method shown in FIG. 12, or may be separately performed. This is not limited.

Optionally, the core network device may further send seventh indication information to the network device, where the seventh indication information indicates wake-up time information of the terminal device. Based on this, the network device may send the paging message, the downlink trigger message, the selection message, or the another downlink message to the terminal device when the terminal device is in the awake state, to improve communication performance.

For example, the wake-up time information may include time position information. The time position information may indicate a frame number corresponding to wake-up time of the terminal device, for example, an xx^{th} frame (or subframe or hyperframe), or may indicate an xx^{th} slot, or may indicate moment information (for example, HH:MM:SS), or the like. This is not limited. Alternatively, the wake-up time information may include a difference between a current moment and wake-up time of the terminal device. The difference may be expressed in frames, subframes, or hyperframes, for example, xx frames (or subframes or hyperframes); or may be expressed in slots, for example, xx slots; or may be expressed in absolute time, for example, xx seconds or xx milliseconds. Alternatively, the wake-up time information may be moment information (for example, HH:MM:SS) or the like. This is not limited.

For example, the wake-up time information is a 1000^{th} frame number. The terminal device may wake up at the 1000^{th} frame number, and the network device may send the paging message, the downlink trigger message, the selection message, or the another downlink message at the 1000^{th} frame number.

The network device may periodically send the paging message, the downlink trigger message, the selection message, or the another downlink message to the terminal device, or the network device may continuously send the paging message, the downlink trigger message, the selection message, or the another downlink message to the terminal device, or the network device may send the paging message, the downlink trigger message, the selection message, or the another downlink message to the terminal device by using a DRX mechanism/an eDRX mechanism. This is not limited.

Optionally, different from the foregoing communication scenario including the core network device, the network device, and the terminal device, in an architecture including a relay terminal device, that is, in a communication scenario including the core network device, the network device, the relay terminal device, and the terminal device (for example, the A-IoT device), when the core network device or the network device sends various information (for example, the first indication information, the second indication information, the third indication information, the fourth indication information, the seventh indication information, the ninth indication information, and the tenth indication information) to the terminal device, the relay terminal device may forward the information. When the terminal device sends various information (for example, the fifth indication information, the sixth indication information, and the eighth indication information) to the network device or the core network device, the relay terminal device may also forward the information.

Optionally, the core network device may also send the wake-up time information to the relay terminal device.

The core network device or the network device may send the wake-up time information of the A-IoT device to the relay terminal device. Based on this, the relay terminal device may send a paging message, a downlink trigger message, a selection message, or another downlink message to the A-IoT device when the A-IoT device is in the awake state, to improve communication performance.

It may be understood that, the wake-up time information and the following paging occasion (paging occasion, PO) mechanism may be used separately, or may be used in combination. This is not limited.

For example, the wake-up time information is used in combination with the following PO mechanism. The core network device may indicate the wake-up time information of the terminal device to the network device, and the network device may start to send a paging message of the terminal device by using the DRX mechanism based on the wake-up time information of the terminal device. A specific sending position of the paging message may be determined based on the following PO.

For example, the terminal device detects the paging message in the awake state. Time at which the terminal device detects the paging message may be determined based on the PO.

The terminal device may determine a location of the PO based on identification information (for example, a 5G-temporary mobile subscriber identity (S-temporary mobile subscriber identity, 5G-S-TMSI)) of the terminal device. For example, the identification information of the terminal device is determined by using 5G-S-TMSI mod 1024, and the location of the PO is determined based on the identification information of the terminal device, so that the terminal device can detect the paging message at the PO.

The paging message may carry a paging record (paging record), and corresponds to identification information of at least one paged terminal device. If a paging message received by the terminal device includes the identification information of the terminal device, it indicates that the terminal device is paged. In a subsequent procedure, the terminal device may initiate a random access (random access, RA) procedure, to establish a connection to the network device.

For example, a calculation rule of the PO may be as follows:

In time domain, the terminal device may attempt to receive a paging message at a PO of a specific frame (for example, a paging frame (paging frame, PF)) in a paging cycle of the terminal device (where one PO may include a plurality of slots, and a PO in LTE is a subframe). Therefore, the network device may send the paging message through an air interface at the moment, and the terminal device may receive the paging message at the moment.

The PF is a radio frame, and the frame may include one or more POs. The PO may be a set of PDCCH monitoring occasions (PDCCH monitoring occasions), and may include a plurality of slots (or subframes or orthogonal frequency division multiplexing (orthogonal frequency division multiplexing, OFDM) symbols). At the PO, there may be a PDCCH scrambled by a paging radio network temporary identifier (paging radio network temporary identifier, P-RNTI) and indicating a paging message. For each terminal device, there may be one PO used to receive paging in each paging cycle.

For example, the PF may be a system frame that meets the following formula: (SFN + PF_offset) mod T = (T div N) * (UE_ID mod N).

The PO may be indicated by using an index i_s, where i_s = floor (UE_ID/N) mod Ns.

Definitions of parameters in the foregoing formulas may be shown in Table 1.

**Table 1**

| Parameter | Definition |
|---|---|
| SFN | System frame number (system frame number) |
| PF_offset | PF offset (offset used for PF) |
| T | DRX cycle, which is a minimum value of specific DRX and default DRX (namely, min (specific DRX, default DRX)) |
| | Note: If UE-specific DRX is not configured, the default DRX is used. |
| N | Quantity of PFs in each cycle T |
| UE_ID | 5G-S-TMSI mod 1024 |
| Ns | Quantity of POs in each PF |

For a paging message sent by the core network device, a default DRX cycle (default cycle) may be configured by using an information element (information element, IE) of a system information block 1 (system information block 1, SIB1): PCCH-Config->defaultPaging Cycle. Alternatively, for a paging message sent by the core network device, a specific DRX cycle (specific cycle) may be configured by using NAS signaling (where the terminal device is in an idle (idle) state). Alternatively, for a paging message sent by the network device, a specific DRX cycle may be configured by using RRC release signaling (where the terminal device is in an inactive (inactive) state).

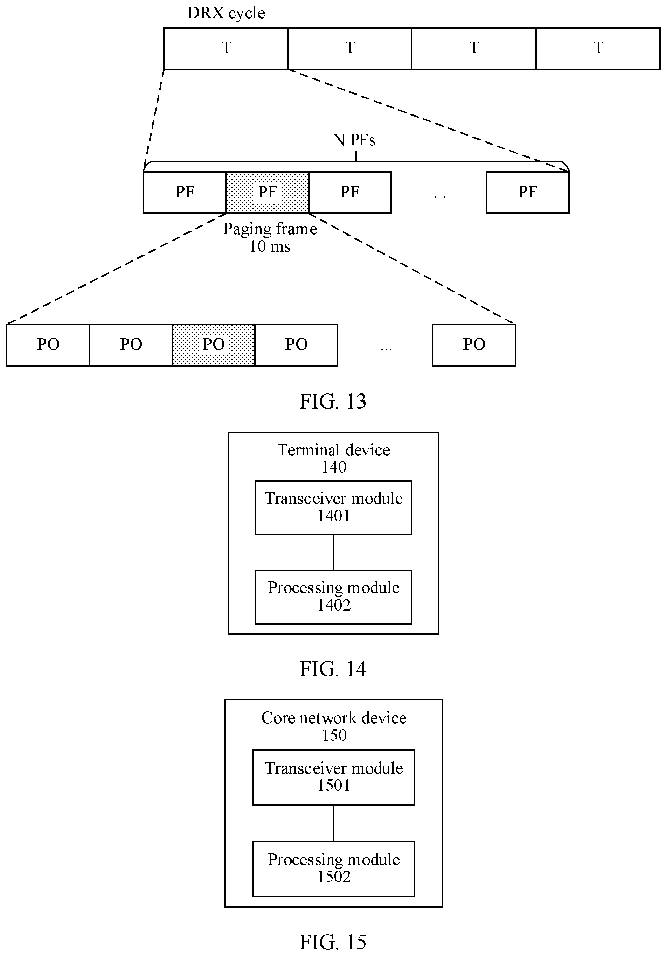

As shown in FIG. 13, T div N is equivalent to a quantity of system frames included in each part obtained by equally dividing one DRX cycle into N parts. UE_ID mod N is equivalent to a (UE_ID mod N)^{th} (where a value ranges from 0 to N-1) part in the N equal parts, and the PF is a 1^{st} system frame in the (UE_ID mod N)^{th} part.

It should be noted that embodiments of this application may be implemented separately, or may be implemented in combination. This is not limited. Unless otherwise stated or there is a logic collision, terms and/or descriptions in different embodiments provided in this application are consistent and may be mutually referenced, and technical features in different embodiments may be combined based on an internal logical relationship thereof, to form a new embodiment.

It may be understood that, in embodiments of this application, an execution body may perform some or all of the steps in embodiments of this application. The steps or operations are merely examples. In embodiments of this application, other operations or variations of various operations may be further performed. In addition, the steps may be performed in a sequence different from a sequence presented in embodiments of this application, and not all the operations in embodiments of this application may be performed.

The solutions provided in embodiments of this application are mainly described above from a perspective of interaction between the devices. It may be understood that, to implement the foregoing functions, each device includes a corresponding hardware structure and/or a corresponding software module for performing each function. A person of ordinary skill in the art should easily be aware that, in combination with algorithms and steps in the examples described in embodiments disclosed in this specification, this application can be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, each device may be divided into functional modules based on the foregoing method examples. For example, each functional module may be obtained through division based on each corresponding function, or two or more than two functions may be integrated into one processing module. The integrated module may be implemented in a form of hardware, or may be implemented in a form of a software functional module. It should be noted that, in embodiments of this application, division into modules is an example, and is merely a logical function division. During actual implementation, another division manner may be used.

When each functional module is obtained through division based on each corresponding function, FIG. 14 shows a terminal device 140. The terminal device 140 may perform actions performed by the terminal device in the methods shown in FIG. 9 to FIG. 13. All related content of steps in the foregoing method embodiments may be referenced to function descriptions of corresponding functional modules. For technical effects that can be achieved, refer to the foregoing method embodiments. Details are not described herein again.

The terminal device 140 may include a transceiver module 1401 and a processing module 1402. For example, the terminal device 140 may be a communication device, or may be a chip used in the communication device, or may be another combined device or part that has a function of the foregoing terminal device. When the terminal device 140 is the communication device, the transceiver module 1401 may be a transceiver. The transceiver may include an antenna, a radio frequency circuit, and the like. The processing module 1402 may be a processor (or a processing circuit), for example, a baseband processor. The baseband processor may include one or more CPUs. When the terminal device 140 is the part that has the function of the foregoing terminal device, the transceiver module 1401 may be a radio frequency unit; and the processing module 1402 may be a processor (or a processing circuit), for example, a baseband processor. When the terminal device 140 is a chip system, the transceiver module 1401 may be an input/output interface of a chip (for example, a baseband chip); and the processing module 1402 may be a processor (or a processing circuit) of the chip system, and may include one or more central processing units. It should be understood that the transceiver module 1401 in this embodiment of this application may be implemented by a transceiver or a transceiver-related circuit component, and the processing module 1402 may be implemented by a processor or a processor-related circuit component (or referred to as a processing circuit).

For example, the transceiver module 1401 may be configured to perform all sending and receiving operations performed by the terminal device in embodiments shown in FIG. 9 to FIG. 13, and/or configured to support another process of the technology described in this specification. The processing module 1402 may be configured to perform all operations other than sending and receiving operations performed by the terminal device in embodiments shown in FIG. 9 to FIG. 13, and/or configured to support another process of the technology described in this specification.

For example, the transceiver module 1401 is configured to obtain first indication information, where the first indication information indicates the terminal device to initiate access to a network or monitor a paging message after a power saving duration, and the first indication information includes power saving duration information; and the processing module 1402 is configured to initiate the access to the network or monitor the paging message after the power saving duration based on the first indication information.

In a possible design, the transceiver module 1401 is specifically configured to receive the first indication information from a core network device.

In a possible design, the core network device is one or more of the following: a mobility management network element, an authentication server function network element, and a tag management function network element.

In a possible design, the transceiver module 1401 is further configured to obtain second indication information, where the second indication information indicates whether to periodically initiate the access to the network.

In a possible design, the transceiver module 1401 is further configured to obtain third indication information, where the third indication information indicates whether to periodically monitor the paging message.

In a possible design, the processing module 1402 is specifically configured to: perform tracking area update TAU after the power saving duration; or perform periodic TAU after the power saving duration.

In a possible design, the processing module 1402 is specifically configured to: monitor the paging message in a first time period after the power saving duration; periodically monitor the paging message after the power saving duration; or continuously monitor the paging message after the power saving duration.

In a possible design, the transceiver module 1401 is further configured to: obtain fourth indication information, where the fourth indication information indicates a periodicity of initiating the access to the network or monitoring the paging message; or determine the power saving duration as a periodicity of initiating the access to the network or monitoring the paging message.

In a possible design, the transceiver module 1401 is further configured to send fifth indication information, where the fifth indication information indicates a power saving duration that the terminal device expects to obtain.

In a possible design, when the power saving duration is less than or equal to a first threshold, the power saving duration information includes hyperframe information corresponding to the power saving duration; or when the power saving duration is greater than a first threshold, the power saving duration information includes absolute duration information of the power saving duration.

In a possible design, the transceiver module 1401 is further configured to: obtain configuration information of a first timer, where the configuration information of the first timer indicates the first timer; and activate a power saving mode when the first timer expires.

In a possible design, the transceiver module 1401 is further configured to send sixth indication information before obtaining the configuration information of the first timer, where the sixth indication information indicates a duration, of the first timer, that the terminal device expects to obtain.

FIG. 15 shows a core network device 150. The core network device 150 may perform actions performed by the core network device in the methods shown in FIG. 9 to FIG. 13. All related content of steps in the foregoing method embodiments may be referenced to function descriptions of corresponding functional modules. For technical effects that can be achieved, refer to the foregoing method embodiments. Details are not described herein again.

The core network device 150 may include a transceiver module 1501 and a processing module 1502. For example, the core network device 150 may be a communication device, or may be a chip used in the communication device, or may be another combined device or part that has a function of the foregoing core network device. When the core network device 150 is the communication device, the transceiver module 1501 may be a transceiver. The transceiver may include an antenna, a radio frequency circuit, and the like. The processing module 1502 may be a processor (or a processing circuit), for example, a baseband processor. The baseband processor may include one or more CPUs. When the core network device 150 is the part that has the function of the foregoing core network device, the transceiver module 1501 may be a radio frequency unit; and the processing module 1502 may be a processor (or a processing circuit), for example, a baseband processor. When the core network device 150 is a chip system, the transceiver module 1501 may be an input/output interface of a chip (for example, a baseband chip); and the processing module 1502 may be a processor (or a processing circuit) of the chip system, and may include one or more central processing units. It should be understood that the transceiver module 1501 in this embodiment of this application may be implemented by a transceiver or a transceiver-related circuit component, and the processing module 1502 may be implemented by a processor or a processor-related circuit component (or referred to as a processing circuit).

For example, the transceiver module 1501 may be configured to perform all sending and receiving operations performed by the core network device in embodiments shown in FIG. 9 to FIG. 13, and/or configured to support another process of the technology described in this specification. The processing module 1502 may be configured to perform all operations other than sending and receiving operations performed by the core network device in embodiments shown in FIG. 9 to FIG. 13, and/or configured to support another process of the technology described in this specification.

For example, the processing module 1502 is configured to generate first indication information; and the transceiver module 1501 is configured to send the first indication information, where the first indication information indicates a terminal device to initiate access to a network or monitor a paging message after a power saving duration, and the first indication information includes power saving duration information.

In a possible design, the transceiver module 1501 is further configured to send second indication information, where the second indication information indicates whether to periodically initiate the access to the network.

In a possible design, the transceiver module 1501 is further configured to send third indication information, where the third indication information indicates whether to periodically monitor the paging message.

In a possible design, the transceiver module 1501 is further configured to: send fourth indication information, where the fourth indication information indicates a periodicity of initiating the access to the network or monitoring the paging message; or determine the power saving duration as a periodicity of initiating the access to the network or monitoring the paging message.

In a possible design, the transceiver module 1501 is further configured to obtain fifth indication information, where the fifth indication information indicates a power saving duration that the terminal device expects to obtain.

In a possible design, the power saving duration is determined based on the fifth indication information.

In a possible design, when the power saving duration is less than or equal to a first threshold, the power saving duration information includes hyperframe information corresponding to the power saving duration; or when the power saving duration is greater than a first threshold, the power saving duration information includes absolute duration information of the power saving duration.

In a possible design, the transceiver module 1501 is further configured to send seventh indication information to a network device, where the seventh indication information indicates wake-up time information of the terminal device.

In a possible design, the wake-up time information includes at least one of a frame number, a subframe number, or absolute time corresponding to wake-up time of the terminal device; or the wake-up time information includes a difference between a current moment and wake-up time of the terminal device.

In a possible design, the transceiver module 1501 is further configured to send configuration information of a first timer, where the configuration information of the first timer indicates the first timer, and the first timer is used by the terminal device to activate a power saving mode when the first timer expires.

In a possible design, the transceiver module 1501 is further configured to obtain sixth indication information before sending the configuration information of the first timer, where the sixth indication information indicates a duration, of the first timer, that the terminal device expects to obtain.

In another implementation, the transceiver module 1401 in FIG. 14 may be replaced with a transceiver, where a function of the transceiver module 1401 may be integrated into the transceiver; and the processing module 1402 may be replaced with a processor, where a function of the processing module 1402 may be integrated into the processor. Further, the terminal device 140 shown in FIG. 14 may further include a memory. Alternatively, the transceiver module 1501 in FIG. 15 may be replaced with a transceiver, where a function of the transceiver module 1501 may be integrated into the transceiver; and the processing module 1502 may be replaced with a processor, where a function of the processing module 1502 may be integrated into the processor. Further, the core network device 150 shown in FIG. 15 may further include a memory.

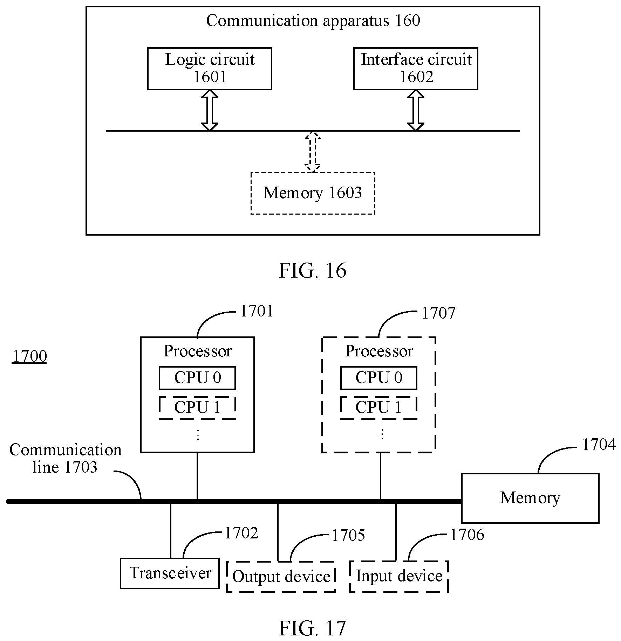

Alternatively, when the processing module 1402 is replaced with a processor, and the transceiver module 1401 is replaced with a transceiver, the terminal device 140 in this embodiment of this application may alternatively be a communication apparatus 160 shown in FIG. 16. Alternatively, when the processing module 1502 is replaced with a processor, and the transceiver module 1501 is replaced with a transceiver, the core network device 150 in this embodiment of this application may alternatively be a communication apparatus 160 shown in FIG. 16.

The processor may be a logic circuit 1601, and the transceiver may be an interface circuit 1602. Further, the communication apparatus 160 shown in FIG. 16 may further include a memory 1603.

An embodiment of this application further provides a communication apparatus 1700 shown in FIG. 17. The communication apparatus 1700 may be a terminal device or a chip or a system on chip in the terminal device, or may be a network device or a chip or a system on chip in the network device, or may be a core network device or a chip or a system on chip in the core network device. As shown in FIG. 17, the communication apparatus 1700 includes a processor 1701, a transceiver 1702, and a communication line 1703.

Further, the communication apparatus 1700 may further include a memory 1704. The processor 1701, the memory 1704, and the transceiver 1702 may be connected through the communication line 1703.

The processor 1701 is a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 1701 may be another apparatus having a processing function, for example, a circuit, a device, or a software module. This is not limited.

The transceiver 1702 is configured to communicate with another device or another communication network. The another communication network may be an Ethernet, a radio access network (radio access network, RAN), a wireless local area network (wireless local area network, WLAN), or the like. The transceiver 1702 may be a module, a circuit, a transceiver, or any apparatus that can implement communication.

The communication line 1703 is configured to transmit information between parts included in the communication apparatus 1700.

The memory 1704 is configured to store instructions. The instructions may be a computer program.

The memory 1704 may be a read-only memory (read-only memory, ROM) or another type of static storage device that can store static information and/or instructions, may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or the like. This is not limited.

It should be noted that the memory 1704 may be independent of the processor 1701, or may be integrated with the processor 1701. The memory 1704 may be configured to store instructions, program code, some data, or the like. The memory 1704 may be located inside the communication apparatus 1700, or may be located outside the communication apparatus 1700. This is not limited. The processor 1701 is configured to execute the instructions stored in the memory 1704, to implement the communication method provided in the following embodiments of this application.

In an example, the processor 1701 may include one or more CPUs, for example, a CPU 0 and a CPU 1 in FIG. 17.

In an optional implementation, the communication apparatus 1700 includes a plurality of processors. For example, in addition to the processor 1701 in FIG. 17, the communication apparatus 1700 may include a processor 1707.

In an optional implementation, the communication apparatus 1700 further includes an output device 1705 and an input device 1706. For example, the input device 1706 is a device, for example, a keyboard, a mouse, a microphone, or a joystick, and the output device 1705 is a device, for example, a display or a speaker (speaker).

It should be noted that the communication apparatus 1700 may be a desktop computer, a portable computer, a network server, a mobile phone, a tablet computer, a wireless terminal, an embedded device, a chip system, or a device having a structure similar to that in FIG. 17. In addition, a composition structure shown in FIG. 17 does not constitute a limitation on the communication apparatus. In addition to the parts shown in FIG. 17, the communication apparatus may include more or fewer parts than those shown in the figure, or some parts may be combined, or different part arrangements may be used.

In this embodiment of this application, the chip system may include a chip, or may include a chip and another discrete device.

In addition, actions, terms, and the like in embodiments of this application may be mutually referenced. This is not limited. In embodiments of this application, names of messages exchanged between devices, names of parameters in the messages, or the like are merely examples. Other names may alternatively be used during specific implementation. This is not limited.

An embodiment of this application further provides a computer program product. When the computer program product is executed by a computer, a function of any one of the foregoing method embodiments may be implemented.

An embodiment of this application further provides a computer program. When the computer program is executed by a computer, a function of any one of the foregoing method embodiments may be implemented.

An embodiment of this application further provides a computer-readable storage medium. All or some of procedures in the foregoing method embodiments may be implemented by a computer program instructing related hardware. The program may be stored in the foregoing computer-readable storage medium. When the program is executed, the procedures in the foregoing method embodiments may be performed. The computer-readable storage medium may be an internal storage unit in the terminal in any one of the foregoing embodiments (including a data transmit end and/or a data receive end), for example, a hard disk or a memory of the terminal. The computer-readable storage medium may alternatively be an external storage device of the terminal, for example, a plug-in hard disk, a smart memory card (smart media card, SMC), a secure digital (secure digital, SD) card, and a flash card (flash card) that are configured on the terminal. Further, the computer-readable storage medium may further include both an internal storage unit and an external storage device of the terminal. The computer-readable storage medium is configured to store the computer program and other programs and data required by the terminal. The computer-readable storage medium may be further configured to temporarily store data that has been output or is to be output.

It should be noted that, terms "first", "second", and the like in the specification, claims, and accompanying drawings of this application are used to distinguish between different objects, and are not used to describe a specific sequence. The terms "first" and "second" are merely intended for description, and shall not be understood as an indication or implication of relative importance or an implicit indication of a quantity of indicated technical features. Therefore, a feature limited by "first" or "second" may explicitly or implicitly include one or more features. In the descriptions of embodiments, unless otherwise specified, "a plurality of" means two or more.

In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that in this application, "at least one (item) "means one or more. ''A plurality of" means two or more than two. "At least two (items)" means two, three, or more than three. "And/or" is used to describe an association relationship between associated objects, and indicates that three relationships may exist. For example, "A and/or B" may indicate the following three cases: Only A exists, only B exists, and both A and B exist, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one of a, b, or c may indicate a, b, c, a and b, a and c, b and c, or a, b, and c, where a, b, and c may be singular or plural. Both "when..." and "if" mean that corresponding processing is performed in an objective case, are not intended to limit time, do not require a determining action during implementation, and do not mean any other limitation.

In embodiments of this application, words such as "example" or "for example" are used to represent giving an example, an illustration, or a description. Any embodiment or design solution described by using "example" or "for example" in embodiments of this application should not be explained as being more preferred or having more advantages than another embodiment or design solution. Exactly, use of the terms such as "example" or "for example" is intended to present a related concept in a specific manner for ease of understanding.

In this application, "sending information to... (a terminal device)" may be understood as that a destination end of the information is the terminal device, and may include directly or indirectly sending the information to the terminal device. "Receiving information from... (a terminal device)" may be understood as that a source end of the information is the terminal device, and may include directly or indirectly receiving the information from the terminal device. Information may undergo necessary processing, for example, a format change, between a source end for sending the information and a destination end. However, the destination end may understand valid information from the source end.

Based on the descriptions of the implementations, a person skilled in the art may clearly understand that for the purpose of convenient and brief descriptions, division into the foregoing functional modules is merely used as an example for descriptions. During actual application, the functions may be allocated to different functional modules for implementation based on a requirement. In other words, an inner structure of an apparatus is divided into different functional modules to implement all or some of the functions described above.

In the several embodiments provided in this application, it should be understood that the disclosed apparatuses and methods may be implemented in other manners. For example, the described apparatus embodiments are merely examples. For example, division into the modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such understanding, the technical solutions in embodiments of this application essentially or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the method described in embodiments of this application. The foregoing storage medium includes any medium that can store program code, for example, a USB flash drive, a removable hard disk, a ROM, a RAM, a magnetic disk, or an optical disc.

## Claims

1. A communication method, comprising:
obtaining first indication information, wherein the first indication information indicates a terminal device to initiate access to a network or monitor a paging message after a power saving duration, and the first indication information comprises power saving duration information; and
initiating the access to the network or monitoring the paging message after the power saving duration based on the first indication information.

2. The method according to claim 1, wherein the method further comprises:
obtaining second indication information, wherein the second indication information indicates whether to periodically initiate the access to the network.

3. The method according to claim 1, wherein the method further comprises:
obtaining third indication information, wherein the third indication information indicates whether to periodically monitor the paging message.

4. The method according to any one of claims 1 to 3, wherein accessing a network device after the power saving duration comprises:
performing tracking area update TAU after the power saving duration; or
performing periodic TAU after the power saving duration.

5. The method according to any one of claims 1 to 3, wherein the monitoring the paging message after the power saving duration comprises:
monitoring the paging message in a first time period after the power saving duration;
periodically monitoring the paging message after the power saving duration; or
continuously monitoring the paging message after the power saving duration.

6. The method according to any one of claims 1 to 5, comprising:
obtaining fourth indication information, wherein the fourth indication information indicates a periodicity of initiating the access to the network or monitoring the paging message; or
determining the power saving duration as a periodicity of initiating the access to the network or monitoring the paging message.

7. The method according to any one of claims 1 to 6, wherein before the obtaining the first indication information, the method further comprises:
sending fifth indication information, wherein the fifth indication information indicates a power saving duration that the terminal device expects to obtain.

8. The method according to any one of claims 1 to 7, wherein
when the power saving duration is less than or equal to a first threshold, the power saving duration information comprises hyperframe information corresponding to the power saving duration; or
when the power saving duration is greater than a first threshold, the power saving duration information comprises absolute duration information of the power saving duration.

9. The method according to any one of claims 1 to 8, further comprising:
obtaining configuration information of a first timer, wherein the configuration information of the first timer indicates the first timer; and
activating a power saving mode when the first timer expires.

10. The method according to claim 9, wherein before the obtaining the configuration information of the first timer, the method further comprises:
sending sixth indication information, wherein the sixth indication information indicates a duration, of the first timer, that the terminal device expects to obtain.

11. A communication method, comprising:
generating first indication information; and
sending the first indication information, wherein the first indication information indicates a terminal device to initiate access to a network or monitor a paging message after a power saving duration, and the first indication information comprises power saving duration information.

12. The method according to claim 11, wherein the method further comprises:
sending second indication information, wherein the second indication information indicates whether to periodically initiate the access to the network.

13. The method according to claim 11, wherein the method further comprises:
sending third indication information, wherein the third indication information indicates whether to periodically monitor the paging message.

14. The method according to any one of claims 11 to 13, comprising:
sending fourth indication information, wherein the fourth indication information indicates a periodicity of initiating the access to the network or monitoring the paging message; or
determining the power saving duration as a periodicity of initiating the access to the network or monitoring the paging message.

15. The method according to any one of claims 11 to 14, wherein before the sending the first indication information, the method further comprises:
obtaining fifth indication information, wherein the fifth indication information indicates a power saving duration that the terminal device expects to obtain.

16. The method according to claim 15, wherein
the power saving duration is determined based on the fifth indication information.

17. The method according to any one of claims 11 to 16, wherein
when the power saving duration is less than or equal to a first threshold, the power saving duration information comprises hyperframe information corresponding to the power saving duration; or
when the power saving duration is greater than a first threshold, the power saving duration information comprises absolute duration information of the power saving duration.

18. The method according to any one of claims 11 to 17, wherein the method further comprises:
sending seventh indication information to a network device, wherein the seventh indication information indicates wake-up time information of the terminal device.

19. The method according to claim 18, wherein
the wake-up time information comprises at least one of a frame number, a subframe number, or absolute time corresponding to wake-up time of the terminal device; or
the wake-up time information comprises a difference between a current moment and wake-up time of the terminal device.

20. The method according to any one of claims 11 to 19, wherein the method further comprises:
sending configuration information of a first timer, wherein the configuration information of the first timer indicates the first timer, and the first timer is used by the terminal device to activate a power saving mode when the first timer expires.

21. The method according to claim 20, wherein before the sending the configuration information of the first timer, the method further comprises:
obtaining sixth indication information, wherein the sixth indication information indicates a duration, of the first timer, that the terminal device expects to obtain.

22. A communication apparatus, wherein the communication apparatus comprises one or more processors, and the one or more processors are configured to run a computer program or instructions, to cause the communication method according to any one of claims 1 to 10 to be performed, or cause the communication method according to any one of claims 11 to 21 to be performed.

23. The communication apparatus according to claim 22, wherein
the communication apparatus further comprises one or more memories, and the one or more memories are configured to store the computer program or the instructions.

24. A communication apparatus, wherein the communication apparatus comprises an interface circuit and a logic circuit, the interface circuit is configured to input and/or output information, and the logic circuit is configured to: perform the communication method according to any one of claims 1 to 10, or perform the communication method according to any one of claims 11 to 21, and perform processing based on the information and/or generate the information.

25. A computer-readable storage medium, wherein the computer-readable storage medium stores computer instructions or a program, and when the computer instructions or the program is run on a computer, the communication method according to any one of claims 1 to 10 is performed, or the communication method according to any one of claims 11 to 21 is performed.

26. A computer program product, wherein the computer program product comprises computer instructions, and when a part or all of the computer instructions are run on a computer, the communication method according to any one of claims 1 to 10 is performed, or the communication method according to any one of claims 11 to 21 is performed.

27. A chip, comprising one or more processors, wherein the one or more processors are coupled to one or more memories, the memory is configured to store a program or instructions, and when the program or the instructions are executed by the processor, the communication method according to any one of claims 1 to 10 is performed, or the communication method according to any one of claims 11 to 21 is performed.
